(19) Europäisches Patentamt
European Patent Office
Office européen des brevets

(11) **EP 4 571 373 B1**

(12) **EUROPÄISCHE PATENTSCHRIFT**

(45) Veröffentlichungstag und Bekanntmachung des Hinweises auf die Patenterteilung:
**04.03.2026   Patentblatt 2026/10**

(21) Anmeldenummer: **23217113.2**

(22) Anmeldetag: **15.12.2023**

(51) Internationale Patentklassifikation (IPC):
**G02B 6/02** (2006.01)

(52) Gemeinsame Patentklassifikation (CPC):
**G02B 6/02328**

(54) **ANTIRESONANTE HOHLKERNFASER MIT OVALEM DNE-ELEMENT**

ANTIRESONANT HOLLOW CORE FIBRE WITH OVAL DNE ELEMENT

FIBRE À COEUR CREUX ANTIRÉSONANT AVEC ÉLÉMENT OVALE DNE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**18.06.2025   Patentblatt 2025/25**

(73) Patentinhaber: **Heraeus Quarzglas GmbH & Co. KG**
**63450 Hanau (DE)**

(72) Erfinder:
• **Rosenberger, Manuel**
**63801 Kleinostheim (DE)**
• **Tiess, Tobias**
**06803 Bitterfeld-Wolfen (DE)**

(74) Vertreter: **Heraeus IP**
**Heraeus Business Solutions GmbH**
**Intellectual Property**
**Heraeusstraße 12-14**
**63450 Hanau (DE)**

(56) Entgegenhaltungen:
WO-A1-2019/053412      CN-A- 116 699 755
US-A1- 2017 160 467

**Beschreibung**

<u>Hintergrund der Erfindung</u>

Die Erfindung betrifft eine antiresonante Hohlkernfaser.

<u>Stand der Technik</u>

Hohlkernfasern weisen einen Kern auf, der einen evakuierten, mit Gas oder Flüssigkeit gefüllten Hohlraum umfasst. In Hohlkernfasern ist die Wechselwirkung des Lichts mit dem Material des Kerns geringer als in Vollkernfasern. Der Brechungsindex des Kerns ist kleiner als der des umgebenden Fasermantels, so dass eine Lichtleitung durch Totalreflexion nicht möglich ist. In Abhängigkeit vom physikalischen Mechanismus der Lichtleitung werden Hohlkernfasern unterteilt in "photonische Bandlückenfasern" und "antiresonante Hohlkernfasern".

Bei der als "antiresonante Hohlkernfaser" (auch "antiresonant hollow-core fiber" oder "ARHCF") bezeichneten Ausführungsvariante der Hohlkernfaser ist der hohle Kernbereich von einem Fasermantel umgeben, in dem sogenannte Antiresonanzeinheiten (auch "antiresonante Elemente" oder "AREs") angeordnet sind. Die um den Hohlkern gleichmäßig verteilten Wandungen der Antiresonanzeinheiten können als in Antiresonanz betriebene Fabry-Perot-Kavitäten wirken, die das auftreffende Licht reflektieren und dadurch eine Wellenleitung im Faserkern ermöglichen.

Diese Technologie verspricht eine Hohlkernfaser mit niedriger optischer Dämpfung, einem sehr breiten Transmissionsspektrum (auch im UV- oder IR-Wellenlängenbereich) und einer geringen Latenz bei der Datenübertragung.

Aus der Offenlegungsschrift WO 2019 053412 A1 ist eine antiresonante Hohlkernfaser bekannt, bei der der Hohlkern von einem Fasermantel mit Antiresonanzeinheiten umgeben ist. Diese Antiresonanzeinheiten weisen drei Elemente auf, welche ineinander verschachtelt sind:

- ein äußeres ARE-Element,
- ein im ARE-Element angeordnetes NE-Element, und
- ein im NE-Element angeordnetes DNE-Element.

Es hat sich aber als nachteilig herausgestellt, dass dieses Design eine ungünstige Korrelation zwischen

- dem Wellenleiterverlust der Grundmode einerseits und
- der Differenz des effektiven Modenindex zwischen höheren Kernmoden und verlustbehafteten ARE Moden andererseits

aufweisen. Dies macht derartige antiresonante Hohlkernfasern ungeeignet für Anwendungen, speziell im Telekommunikationsbereich.

<u>Technische Aufgabenstellung</u>

Für die industrielle Nutzung bedarf es antiresonanter Hohlkernfasern, die geringe Wellenleiterverluste aufweisen. Weiterhin bedarf es einer antiresonanten Hohlkernfaser, die einfach und in großem Umfang herstellbar ist. Nur so lassen sich die Kosten für die antiresonanten Hohlkernfasern in einen sinnhaften Rahmen bringen. Dabei gilt, dass antiresonante Hohlkernfasern, die im Labormaßstab gute Ergebnisse bringen, nicht zwangsläufig auch für den großflächigen Einsatz nutzbar sind.

Ein Ziel der Erfindung ist es, eine antiresonante Hohlkernfaser bereitzustellen, welche die oben genannten Nachteile überwindet.

Ein Ziel der Erfindung ist es, eine antiresonante Hohlkernfaser bereitzustellen, welche exakt und reproduzierbar herstellbar ist und zusätzlich eine geringe Dämpfung aufweist.

Insbesondere ist es ein Ziel der Erfindung, eine antiresonante Hohlkernfaser bereitzustellen, die besonders niedrige Wellenleiterverluste aufweist.

Insbesondere ist es ein Ziel der Erfindung, eine antiresonante Hohlkernfaser bereitzustellen, die Moden im Faserkern mit höherer Ordnung effizient dämpft.

Insbesondere ist es ein Ziel der Erfindung, eine antiresonante Hohlkernfaser bereitzustellen, die eine günstige Korrelation zwischen einerseits niedrigen Wellenleiterverlusten der Grundmode und andererseits effizienter Dämpfung von Moden höherer Ordnung im Kern aufweist.

Bevorzugte Ausführungsvarianten der Erfindung

Ein Beitrag zur mindestens teilweisen Erfüllung mindestens einer der zuvor genannten Aufgaben wird durch die Merkmale der unabhängigen Ansprüche geleistet. Die abhängigen Ansprüche stellen bevorzugte Ausführungsvarianten bereit, die zur mindestens teilweisen Erfüllung mindestens einer der Aufgaben beitragen.

Folgende Ausführungsvarianten einer antiresonanten Hohlkernfaser tragen mindestens teilweise zur Erfüllung mindestens einer der zuvor genannten Aufgaben bei:

I1.I Eine erste Ausführungsvariante einer antiresonanten Hohlkernfaser, umfassend

einen Fasermantel, welcher eine Innenbohrung aufweist,
eine Faser-Längsachse und einen Faserkernradius R_Faser,
eine Anzahl von Antiresonanzeinheiten, jeweils umfassend

- ein ARE-Element,
- ein NE-Element,
- ein DNE-Element,

wobei die Antiresonanzeinheiten zueinander beabstandet und zueinander kontaktfrei an Soll-Positionen an einer Innenseite der Innenbohrung angeordnet sind,
wobei in den Antiresonanzeinheiten

- das ARE-Element einen kreisförmigen Querschnitt aufweist,
- das NE-Element in einem ersten Innenraum des ARE-Elements angeordnet ist, und
- das DNE-Element zumindest teilweise in einen zweiten Innenraum (3470) des NE-Elements angeordnet ist.

Erfindungsgemäß ist in dieser Ausführungsvariante vorgesehen, dass in mindestens einer Antiresonanzeinheit

- das NE-Element einen kreisbogenartigen Querschnitt aufweist und entlang zweier Verbindungsnähte mit dem DNE-Element verbunden ist,
- das DNE-Element einen ovalen Querschnitt aufweist, und
- im Querschnitt eine Summe der Abstände eines beliebigen Punktes auf einer DNE-Elementwandung von zwei Brennpunkten für alle Punkte auf weniger als 15 % der Summe der Abstände gleich ist.

I2.I Eine weitere Ausführungsvariante einer antiresonanten Hohlkernfaser, umfassend die Merkmale der ersten Ausführungsvariante, zeichnet sich dadurch aus, dass im Querschnitt die Summe der Abstände eines beliebigen Punktes auf der DNE-Elementwandung von zwei Brennpunkten für alle Punkte auf weniger als 10 %, insbesondere weniger als 5 % der Summe der Abstände gleich ist.

I3.I Eine weitere Ausführungsvariante einer antiresonanten Hohlkernfaser, umfassend die Merkmale wenigstens einer der vorherigen beiden Ausführungsvarianten, zeichnet sich dadurch aus, dass das DNE-Element eine längste Querschnittsachse AL und eine kürzeste Querschnittsachse AK aufweist.

I4.I Eine weitere Ausführungsvariante einer antiresonanten Hohlkernfaser, umfassend die Merkmale der dritten Ausführungsvariante, zeichnet sich dadurch aus, dass das DNE-Element derart angeordnet ist, dass

- die längste Querschnittsachse AL im Wesentlichen parallel zur Innenbohrung verläuft, und/oder
- die kürzeste Querschnittsachse AK im Wesentlichen rechtwinklig auf der Innenbohrung stehend zur Faser-Längsachse hin ausgerichtet ist.

I5.I Eine weitere Ausführungsvariante einer antiresonanten Hohlkernfaser, umfassend die Merkmale der dritten oder vierten Ausführungsvariante, zeichnet sich dadurch aus, dass für ein Verhältnis der längsten Querschnittsachse AL zur kürzesten Querschnittsachse AK gilt:

$$\frac{\text{AL}}{\text{AK}} = [1{,}1; 4{,}0]$$

I6.I Eine weitere Ausführungsvariante einer antiresonanten Hohlkernfaser, umfassend die Merkmale wenigstens einer der vorherigen Ausführungsvarianten 3 bis 5, zeichnet sich dadurch aus, dass für das Verhältnis der längsten Querschnittsachse AL zur kürzesten Querschnittsachse AK gilt:

- größer oder gleich 1,15, insbesondere größer oder gleich 1,20, insbesondere größer oder gleich 1,25, insbesondere größer oder gleich 1,50; und
- kleiner oder gleich 3,80, insbesondere kleiner oder gleich 3,60, insbesondere kleiner oder gleich 3,50.

I7.I Eine weitere Ausführungsvariante einer antiresonanten Hohlkernfaser, umfassend die Merkmale wenigstens einer der vorherigen Ausführungsvarianten, zeichnet sich dadurch aus, dass für ein Verhältnis einer NE-Innenraumhöhe H_NE, multipliziert mit einem zweifachen NE-Kreisradius NE_R, dividiert durch eine Faserkernfläche A_Faser gilt:

$$\frac{H\_NE * (2 * NE\_R)}{A\_Faser} = [0{,}35; 0{,}7]$$

I8.I Eine weitere Ausführungsvariante einer antiresonanten Hohlkernfaser, umfassend die Merkmale wenigstens einer der vorherigen Ausführungsvarianten, zeichnet sich dadurch aus, dass für das Verhältnis der NE-Innenraumhöhe H_NE, multipliziert mit dem zweifachen NE-Kreisradius NE_R, dividiert durch die Faserkernfläche A_Faser gilt:

- größer oder gleich 0,4, insbesondere größer oder gleich 0,50, insbesondere größer oder gleich 0,56; und
- kleiner oder gleich 0,65, insbesondere kleiner oder gleich 0,62, insbesondere kleiner oder gleich 0,6.

I9.I Eine weitere Ausführungsvariante einer antiresonanten Hohlkernfaser, umfassend die Merkmale wenigstens einer der vorherigen Ausführungsvarianten, zeichnet sich dadurch aus, dass für ein Verhältnis einer ARE-Innenraumhöhe H_ARE dividiert durch einen Kernradius R_Faser gilt:

$$\frac{H\_ARE}{R\_Faser} = [0{,}85; 1{,}25]$$

I10.I Eine weitere Ausführungsvariante einer antiresonanten Hohlkernfaser, umfassend die Merkmale wenigstens einer der vorherigen Ausführungsvarianten, zeichnet sich dadurch aus, dass für das Verhältnis der ARE-Innenraumhöhe H_ARE dividiert durch den Kernradius R_Faser gilt:

- größer oder gleich 0,9, insbesondere größer oder gleich 0,95, insbesondere größer oder gleich 1,0; und
- kleiner oder gleich 1,2, insbesondere kleiner oder gleich 1,15, insbesondere kleiner oder gleich 1,1.

111.1 Eine weitere Ausführungsvariante einer antiresonanten Hohlkernfaser, umfassend die Merkmale wenigstens einer der vorherigen Ausführungsvarianten, zeichnet sich dadurch aus, dass für ein Verhältnis der ARE-Innenraumhöhe H_ARE, multipliziert mit dem zweifachen NE-Kreisradius NE_R, dividiert durch eine NE-Innenfläche A_NE gilt:

$$\frac{H\_ARE * (2 * NE\_R)}{A\_NE} = [0{,}2; 1{,}0]$$

I12.I Eine weitere Ausführungsvariante einer antiresonanten Hohlkernfaser, umfassend die Merkmale wenigstens einer der vorherigen Ausführungsvarianten, zeichnet sich dadurch aus, dass für das Verhältnis der ARE-Innenraumhöhe H_ARE, multipliziert mit dem zweifachen NE-Kreisradius NE_R, dividiert durch die NE-Innenfläche A_NE gilt:

- größer oder gleich 0,25, insbesondere größer oder gleich 0,3; und
- kleiner oder gleich 0,95, insbesondere kleiner oder gleich 0,8.

I13.I Eine weitere Ausführungsvariante einer antiresonanten Hohlkernfaser, umfassend die Merkmale wenigstens einer der vorherigen Ausführungsvarianten, zeichnet sich dadurch aus, dass

- das ARE-Element einen ersten Kreisradius R_ARE aufweist, und
- das NE-Element einen zweiten Kreisradius R_NE und einen Mittelpunktswinkel MW_NE aufweist.

I14.I Eine weitere Ausführungsvariante einer antiresonanten Hohlkernfaser, umfassend die Merkmale wenigstens einer der vorherigen Ausführungsvarianten, zeichnet sich dadurch aus, dass die antiresonante Hohlkernfaser drei, vier, fünf, sechs, sieben oder acht Antiresonanzeinheiten aufweist.

I15.I Eine weitere Ausführungsvariante einer antiresonanten Hohlkernfaser, umfassend die Merkmale wenigstens einer der vorherigen Ausführungsvarianten, zeichnet sich dadurch aus, dass mindestens eine der Antiresonanzeinheiten wenigstens eines der folgenden Merkmale aufweist:

- das ARE-Element und/oder das NE-Element und/oder das DNE-Element einen amorphen Festkörper, insbesondere ein Glas, insbesondere Quarzglas, umfasst,
- das ARE-Element und/oder das NE-Element und/oder das DNE-Element aus einem amorphen Festkörper, insbesondere einem Glas, insbesondere Quarzglas, besteht,
- das wenigstens zwei von ARE-Element, NE-Element und DNE-Element materialeinheitlich sind, insbesondere ein Glas mit einem Brechungsindex von mindestens 1,4, insbesondere 1,4 bis 3, insbesondere 1,4 bis 2,8 umfassen oder daraus bestehen, und
- eine Wandstärke von wenigstens zwei von ARE-Element, NE-Element und DNE-Element im Wesentlichen gleich sind.

I16.I Eine weitere Ausführungsvariante einer antiresonanten Hohlkernfaser, umfassend die Merkmale wenigstens einer der vorherigen Ausführungsvarianten, zeichnet sich dadurch aus, dass die antiresonante Hohlkernfaser wenigstens eines der folgenden Merkmale aufweist:

- eine fundamentale Dämpfung von weniger als 1,0 dB/km, insbesondere von weniger als 0,25 dB/km, insbesondere von weniger als 0,1 dB/km bei einer transportierten Wellenlänge zwischen 0,3 $\mu$m und 3,0 $\mu$m, insbesondere zwischen 1,0 $\mu$m und 2,5 $\mu$m, und
- eine fundamentale Dämpfung von weniger als 1 dB/km bei einer transportierten Wellenlänge von bis zu 0,8 $\mu$m.

I17.I Eine weitere Ausführungsvariante einer antiresonanten Hohlkernfaser, umfassend die Merkmale wenigstens einer der vorherigen Ausführungsvarianten, zeichnet sich dadurch aus, dass die Antiresonanzeinheit wenigstens eines der folgenden Merkmale aufweist:

- eine Wandstärke einer ARE-Elementwandung des ARE-Elements und/oder einer NE-Elementwandung des NE-Elements und/oder einer DNE-Elementwandung des DNE-Elements beträgt zwischen 0,1 $\mu$m und 2,5 $\mu$m, insbesondere zwischen 0,15 $\mu$m und 1,5 $\mu$m, insbesondere zwischen 0,25 $\mu$m und 0,75 $\mu$m, insbesondere zwischen 0,35 $\mu$m und 0,65 $\mu$m, insbesondere 0,5 $\mu$m,
- eine Wandstärke einer ARE-Elementwandung des ARE-Elements und/oder einer NE-Elementwandung des NE-Elements und/oder einer DNE-Elementwandung des DNE-Elements beträgt bei einer Signalwellenlänge von 1550 nm im ersten Transmissionsfenster zwischen 0,35 $\mu$m und 0,65 $\mu$m, insbesondere zwischen 0,4 $\mu$m und 0,6 $\mu$m, insbesondere 0,5 $\mu$m,
- eine Wandstärke einer ARE-Elementwandung des ARE-Elements und/oder einer NE-Elementwandung des NE-Elements und/oder einer DNE-Elementwandung des DNE-Elements beträgt bei einer Signalwellenlänge von 1550 nm im zweiten Transmissionsfenster zwischen 0,75 $\mu$m und 1,25 $\mu$m, insbesondere zwischen 0,9 $\mu$m und 1,1 $\mu$m, insbesondere 1 $\mu$m.

I18.I Eine weitere Ausführungsvariante einer antiresonanten Hohlkernfaser, umfassend die Merkmale wenigstens einer der vorherigen Ausführungsvarianten, zeichnet sich dadurch aus, dass der Kernradius R_Faser wenigstens eines der folgenden Merkmale aufweist:

- kleiner oder gleich 26 $\mu$m, insbesondere kleiner oder gleich 23 $\mu$m, insbesondere kleiner oder gleich 20 $\mu$m; und
- größer oder gleich 10 $\mu$m, insbesondere größer oder gleich 12 $\mu$m, insbesondere größer oder gleich 14 $\mu$m.

I19.I Eine weitere Ausführungsvariante einer antiresonanten Hohlkernfaser, umfassend die Merkmale wenigstens einer der vorherigen Ausführungsvarianten, zeichnet sich dadurch aus, dass das ARE-Element wenigstens eines der folgenden Merkmale aufweist:

- ein erster Kreisradius R_ARE kleiner oder gleich 30 $\mu$m, insbesondere kleiner oder gleich 25 $\mu$m, insbesondere kleiner oder gleich 22,5 $\mu$m, insbesondere kleiner oder gleich 16 $\mu$m ist; und
- der erste Kreisradius R_ARE größer oder gleich 5 $\mu$m, insbesondere größer oder gleich 7 $\mu$m, insbesondere größer oder gleich 11,5 $\mu$m, insbesondere größer oder gleich 12,25 $\mu$m ist, insbesondere größer oder gleich 14,5 $\mu$m ist.

I20.I Eine weitere Ausführungsvariante einer antiresonanten Hohlkernfaser, umfassend die Merkmale wenigstens einer der vorherigen Ausführungsvarianten, zeichnet sich dadurch aus, dass das NE-Element wenigstens eines der folgenden Merkmale aufweist:

- ein zweiter Kreisradius R_NE kleiner oder gleich als 25 $\mu$m, insbesondere kleiner oder gleich als 19 $\mu$m, insbesondere kleiner oder gleich 17 $\mu$m ist,
- der zweite Kreisradius R_NE größer oder gleich 1,5 $\mu$m, insbesondere größer als 2,5 $\mu$m, insbesondere größer oder gleich 3,5 $\mu$m ist,
- ein Mittelpunktswinkel MW_NE kleiner 340°, insbesondere kleiner 330°, insbesondere kleiner 320° ist; und
- der Mittelpunktswinkel MW_NE größer 180°, insbesondere größer 200°, insbesondere größer 220° ist.

I21.I Eine weitere Ausführungsvariante einer antiresonanten Hohlkernfaser, umfassend die Merkmale wenigstens einer der vorherigen Ausführungsvarianten, zeichnet sich dadurch aus, dass das DNE-Element wenigstens eines der folgenden Merkmale aufweist:

- die längste Querschnittsachse AL kleiner oder gleich 20 $\mu$m, insbesondere kleiner oder gleich 16,5 $\mu$m, insbesondere kleiner oder gleich 14,6 $\mu$m ist;
- der längste Querschnittsachse AL größer oder gleich 4 $\mu$m, insbesondere größer oder gleich 6,5 $\mu$m, insbesondere größer oder gleich 8 $\mu$m ist;
- die kürzeste Querschnittsachse AK kleiner oder gleich 12 $\mu$m, insbesondere kleiner oder gleich 9,5 $\mu$m, insbesondere kleiner oder gleich 8 $\mu$m ist; und
- der kürzeste Querschnittsachse AK größer oder gleich 1,5 $\mu$m, insbesondere größer oder gleich 2,5 $\mu$m, insbesondere größer oder gleich 4 $\mu$m ist.

I22.I Eine weitere Ausführungsvariante einer antiresonanten Hohlkernfaser, umfassend die Merkmale wenigstens einer der vorherigen Ausführungsvarianten, zeichnet sich dadurch aus, dass alle Antiresonanzeinheiten eine Ausgestaltung nach einem der vorherigen Ansprüche aufweisen.

Ausführliche Beschreibung

Einige der beschriebenen Merkmale sind mit dem Begriff "im Wesentlichen" verknüpft. Der Begriff "im Wesentlichen" ist so zu verstehen, dass unter realen Bedingungen und Fertigungstechniken eine mathematisch exakte Auslegung von Begrifflichkeiten wie "elliptisch", "senkrecht", "parallel", "Durchmesser" oder "oval" nie exakt, sondern nur innerhalb gewisser fertigungstechnischer Fehlertoleranzen gegeben sein kann. Beispielsweise schließen "im Wesentlichen parallele Achsen" einen Winkel von -10 Grad bis 10 Grad, insbesondere -5 Grad bis 5 Grad zueinander ein. Eine "im Wesentlichen aus Quarzglas bestehende Vorrichtung" umfasst beispielsweise einen Quarzglasanteil von ≥95 bis ≤100 Gewichts-%. Weiterhin schließt "im Wesentlichen rechtwinklig" einen Winkel von 85 Grad bis 95 Grad ein. Eine weitere Konkretisierung des Begriffs "im Wesentlichen" erfolgt für einige Merkmale weiter unten.

Die oben genannten Aufgaben werden zumindest teilweise gelöst durch eine antiresonante Hohlkernfaser, umfassend einen Fasermantel (auch als Mantel bezeichnet), welcher eine Innenbohrung aufweist, eine Faser-Längsachse und einen Faserkernradius R_Faser, eine Anzahl von Antiresonanzeinheiten, jeweils umfassend

- ein ARE-Element,
- ein NE-Element, und
- ein DNE-Element,

wobei die Antiresonanzeinheiten zueinander beabstandet und zueinander kontaktfrei an Soll-Positionen an einer Innenseite der Innenbohrung angeordnet sind, wobei in den Antiresonanzeinheiten

- das ARE-Element einen kreisförmigen Querschnitt aufweist,
- das NE-Element in einem ersten Innenraum des ARE-Elements angeordnet ist, und
- das DNE-Element zumindest teilweise in einen zweiten Innenraum des NE-Elements angeordnet ist.

Dabei ist vorgesehen, dass in mindestens einer Antiresonanzeinheit

- das NE-Element einen kreisbogenartigen Querschnitt aufweist und entlang zweier Verbindungsnähte mit dem DNE-Element verbunden ist,
- das DNE-Element einen ovalen Querschnitt aufweist, und
- im Querschnitt eine Summe der Abstände eines beliebigen Punktes auf einer DNE-Elementwandung von zwei Brennpunkten für alle Punkte auf weniger als 15 % der Summe der Abstände gleich ist.

Überraschend wurde festgestellt, dass die ovale Geometrie des DNE-Elements in Kombination mit dem kreisbogenartigen Querschnitt des NE-Elements vorteilhaft für die Wellenleiterverluste der Grundmode ist.

Es werden folgende Moden betrachtet:

- Grundmode im Kern

    o auch als Kerngrundmoden bezeichnet, die innerhalb eines Faserkerns propagieren;

- Moden höherer Ordnung im Kern

    o auch als Kernmoden höherer Ordnung (HOM) bezeichnet,

- Moden in dem ARE-Element

    o auch als ARE-Moden bezeichnet, die innerhalb eines ersten Innenraums des ARE-Elements propagieren,

- Moden in dem NE-Element

    o auch als NE-Moden bezeichnet, die innerhalb eines zweiten Innenraums des NE-Elements propagieren,

- Moden in dem DNE-Element

    o auch als DNE-Moden bezeichnet, die innerhalb eines dritten Innenraums des DNE-Elements propagieren.

Der Confinement Loss (auch Wellenleiterverlust oder Wellenleitungsverlust) bezeichnet die Dämpfung der jeweiligen Mode.

Der effektive Modenindex $n_{eff}$ gibt über die Relation $v_{phase}=c/n_{eff}$ die Phasengeschwindigkeit der jeweiligen Mode in Ausbreitungsrichtung entlang der Faser-Längsachse an, wobei c die Vakuumlichtgeschwindigkeit bezeichnet.

Die Modenindexdifferenz $\Delta n_{eff}$ (ARE) bezeichnet die Differenz zwischen dem effektiven Modenindex der Moden höherer Ordnung im Kern und dem effektiven Modenindex der ARE-Moden:

$$\Delta n_{eff} \; (ARE)= n_{eff,core-HOM} - n_{eff,ARE\;Mode}.$$

Äquivalent ergibt sich die Modenindexdifferenz $\Delta n_{eff}$ (NE) als die Differenz zwischen dem effektiven Modenindex der Moden höherer Ordnung im Kern und dem effektiven Modenindex der NE-Mode:

$$\Delta n_{eff} \; (NE)= n_{eff,core-HOM} - n_{eff,NE\;Mode}.$$

Ist die Modenindexdifferenz $\Delta n_{eff}$ nahe Null, propagieren die beiden betrachteten Moden im Wesentlichen mit der gleichen Phasenausbreitungsgeschwindigkeit und können damit kohärent (phasentreu) koppeln, was zu einer effektiven Energie-Kopplung führt. In diesem Falle koppelt die Energie der Kernmode höherer Ordnung in stark verlustbehaftete ARE- oder NE -Moden. So wandert Energie aus den Kernmoden höherer Ordnung in die Moden der antiresonanten Elemente, was zu einer Verbesserung der Grundmodigkeit führt.

In den unten näher beschriebenen Simulationen wurde der effektive Modenindex $n_{eff}$ aus der Propagationskonstante $\beta$ der jeweiligen Mode extrahiert. Eine Mode "j" ist dabei eine Lösung des physikalischen Gleichungssystems:

$$E_j \,(x,y,z,t) = Amplitude_j \,(x,y) * exp(i*(\beta_j*z - \omega*t)).$$

Dabei beschreibt

- $E_j$ (x,y,z,t) die elektrische Feldverteilung in den drei Raumdimensionen x,y,z zum Zeitpunkt t, und
- Amplitude$_j$ (x,y) die transversale elektrische Feldverteilung.

Folglich beschreibt die Propagationskonstante β die Phaseneigenschaften der Wellenausbreitung entlang der Faserachse z. Basierend auf der Wellenlänge des Lichtes λ ergibt sich der effektive Modenindex $n_{eff}$ für Mode "j" direkt aus β:

$$\beta_j = 2*pi/\lambda*n_{eff,j}$$

Die Propagationskonstante der j-ten Mode - $\beta_j$ - ist als Lösung der Simulation im Allgemeinen ein komplexer Parameter. Während der Realteil n_eff,j ergibt, kann aus dem Imaginärteil der Wellenleiterverlust abgeleitet werden.

Wie noch näher verdeutlicht, führt die Ausgestaltung des DNE-Elements zu einer effektiven Kopplung der Moden höherer Ordnung im Kern mit den Moden im DNE-Element, so dass nach einer kurzen Laufstrecke nur noch die Grundmode im Kern propagiert. Optimalerweise weist das DNE-Element der beschriebenen antiresonanten Hohlkernfaser einen ellipsoiden Querschnitt auf. Als Ellipse wird dabei eine geschlossene ovale Kurve bezeichnet, wobei die Summe der Abstände eines Ellipsenpunktes von zwei Punkten - den Brennpunkten - für alle Punkte gleich ist. Aufgrund von fertigungstechnischen Toleranzen wird der Querschnitt des DNE-Elements der offenbarten antiresonanten Hohlkernfaser aber nie mathematisch exakt ellipsoid sein. Vielmehr wird sich der Querschnitt des DNE-Elements optimalerweise einer ellipsoiden Form nähern. Deshalb ist vorgesehen, dass das DNE-Element einen ovalen Querschnitt aufweist und im Querschnitt eine Summe der Abstände eines beliebigen Punktes auf einer DNE-Elementwandung von zwei Brennpunkten für alle Punkte auf der DNE-Elementwandung auf weniger als 15 % der Summe der Abstände gleich ist. Diese Abweichung vom optimalen ellipsoiden Querschnitt ist einerseits fertigungstechnisch realistisch und führt andererseits weiterhin zu hervorragenden Resultaten bei der Wellenleitung.

Eine weitere Ausführungsvariante ist dadurch gekennzeichnet, dass im Querschnitt die Summe der Abstände eines beliebigen Punktes auf der DNE-Elementwandung von zwei Brennpunkten auf der DNE-Elementwandung für alle Punkte auf weniger als 10 %, insbesondere weniger als 5 % der Summe der Abstände, gleich ist.

Eine weitere Ausführungsvariante ist dadurch gekennzeichnet, dass das DNE-Element im Querschnitt eine längste Querschnittsachse AL und/oder eine kürzeste Querschnittsachse AK aufweist. Die längste Querschnittsachse AL bezeichnet jene Achse, die durch zwei Punkte auf der DNE-Elementwandung verläuft, welche einen maximalen Abstand voneinander aufweisen. Die kürzeste Querschnittsachse AK bezeichnet jene Achse, die durch zwei Punkte auf der DNE-Elementwandung verläuft, welche einen minimalen Abstand zueinander aufweisen. Insbesondere sind eine oder beide Querschnittsachsen Symmetrieachsen des DNE-Elements.

Eine weitere Ausführungsvariante ist dadurch gekennzeichnet, dass die Brennpunkte auf der längsten Querschnittsachse AL angeordnet sind. In dieser Ausführungsvariante nähert sich der ovale Querschnitt des DNE-Elements weiter einer ellipsoiden Form an, was die Welleiterverluste positiv beeinflusst.

Eine weitere Ausführungsvariante ist dadurch gekennzeichnet, dass für die mindestens eine Antiresonanzeinheit die längste Querschnittsachse AL innerhalb eines Winkelintervalls von [-10 Grad; 10 Grad] parallel zu einer Kreistangente verläuft, wobei die Kreistangente senkrecht auf dem Mantelinnenradius steht. Anders ausgedrückt verläuft die längste Querschnittsachse AL im Wesentlichen parallel zur Innenbohrung. In dieser Ausführungsvariante nähert sich der ovale Querschnitt des DNE-Elements weiter einer ellipsoiden Form an, was die Wellenleiterverluste positiv beeinflusst.

Eine weitere Ausführungsvariante ist dadurch gekennzeichnet, dass für die mindestens eine Antiresonanzeinheit die kürzeste Querschnittsachse AK

- innerhalb eines Winkelintervalls von [-10 Grad; 10 Grad] parallel zu dem Mantelinnenradius, und/oder
- innerhalb von [- 2 μm; 2 μm] an der Faser-Längsachse vorbei

verläuft. Anders ausgedrückt steht die kürzeste Querschnittsachse AK im Wesentlichen rechtwinklig auf der Innenbohrung.

Eine weitere Ausführungsvariante ist dadurch gekennzeichnet, dass für ein Verhältnis der längsten Querschnittsachse AL zur kürzesten Querschnittsachse AK gilt:

$$\frac{AL}{AK} = [1,1; 4,0]$$

Diese Ausführungsvariante führt zu einer weiteren Optimierung der Wellenleiterverluste.

Eine weitere Ausführungsvariante ist dadurch gekennzeichnet, dass für das Verhältnis der längsten Querschnittsachse AL zur kürzesten Querschnittsachse AK gilt:

- größer oder gleich 1,15, insbesondere größer oder gleich 1,20, insbesondere größer oder gleich 1,25, insbesondere größer oder gleich 1,50; und
- kleiner oder gleich 3,80, insbesondere kleiner oder gleich 3,60, insbesondere kleiner oder gleich 3,50.

Durch die Nutzung eines DNE-Elements, welches einen ovalen Querschnitt aufweist, der die oben beschriebenen Verhältnisse der Querschnittsachsen besitzt, können die Wellenleiterverluste weiter reduziert werden.

Eine weitere Ausführungsvariante ist dadurch gekennzeichnet, dass für ein Verhältnis der NE-Innenraumhöhe H_NE, multipliziert mit einem zweifachen NE-Kreisradius NE_R, dividiert durch eine Faserkernfläche A_Faser, gilt:

$$\frac{H\_NE*(2*NE\_R)}{A\_Faser} = [0{,}35; 0{,}7].$$

Diese Ausführungsvariante zeichnet sich dadurch aus, dass die Modenindexdifferenz $\Delta n_{eff}$ (NE) klein ist, wodurch die Grundmodigkeit in der Faser schon nach einer kurzen Laufstrecke erreicht wird und zudem die Wellenleiterverluste gering sind.

Eine weitere Ausführungsvariante ist dadurch gekennzeichnet, dass für das Verhältnis der NE-Innenraumhöhe H_NE, multipliziert mit dem zweifachen NE-Kreisradius NE_R, dividiert durch die Faserkernfläche A_Faser, gilt:

- größer oder gleich 0,4, insbesondere größer oder gleich 0,50, insbesondere größer oder gleich 0,56; und
- kleiner oder gleich 0,65, insbesondere kleiner oder gleich 0,62, insbesondere kleiner oder gleich 0,6.

Eine Auslegung der antiresonanten Hohlkernfaser basierend auf diesen Parametern resultiert in einer weiteren Reduktion der Modenindexdifferenz $\Delta n_{eff}$ (NE). Dies führt zu einer weiteren Reduktion der Laufstrecke, die für das Erreichen der Grundmodigkeit notwendig ist.

Eine weitere Ausführungsvariante ist dadurch gekennzeichnet, dass für ein Verhältnis einer ARE-Innenraumhöhe H_ARE, dividiert durch einen Kernradius R_Faser, gilt:

$$\frac{H\_ARE}{R\_Faser} = [0{,}85; 1{,}25].$$

Diese Ausführungsvariante zeichnet sich dadurch aus, dass die Modenindexdifferenz $\Delta n_{eff}$ (ARE) klein ist. Dadurch wird die Grundmodigkeit in der Faser schon nach einer kurzen Laufstrecke erreicht.

Eine weitere Ausführungsvariante ist dadurch gekennzeichnet, dass für das Verhältnis der ARE-Innenraumhöhe H_ARE, dividiert durch den Kernradius R_Faser, gilt:

- größer oder gleich 0,9, insbesondere größer oder gleich 0,95, insbesondere größer oder gleich 1,0; und
- kleiner oder gleich 1,2, insbesondere kleiner oder gleich 1,15, insbesondere kleiner oder gleich 1,1.

Eine Auslegung der antiresonanten Hohlkernfaser basierend auf diesen Parametern resultiert in einer weiteren Reduktion der Modenindexdifferenz $\Delta n_{eff}$ (ARE). Dies führt zu einer weiteren Reduktion der Laufstrecke, die für das Erreichen der Grundmodigkeit notwendig ist.

Eine weitere Ausführungsvariante ist dadurch gekennzeichnet, dass für ein Verhältnis der ARE-Innenraumhöhe H_ARE, multipliziert mit einem zweifachen NE-Kreisradius NE_R, dividiert durch die NE-Innenfläche A_NE, gilt:

$$\frac{H\_ARE * (2 * NE\_R)}{A\_NE} = [0{,}2; 1{,}0]$$

Durch diese Auslegung der mindestens einen Antiresonanzeinheit wird eine antiresonante Hohlkernfaser erzielt, die einen kleinen Wellenleiterverlust aufweist.

Eine weitere Ausführungsvariante ist dadurch gekennzeichnet, dass für das Verhältnis der ARE-Innenraumhöhe H_ARE, multipliziert mit dem zweifachen NE-Kreisradius NE_R, dividiert durch die NE-Innenfläche A_NE, gilt:

- größer oder gleich 0,25, insbesondere größer oder gleich 0,3; und
- kleiner oder gleich 0,95, insbesondere kleiner oder gleich 0,8.

Die aufgeführten Parameter für die Auslegung der antiresonanten Hohlkernfaser führen zu einer weiteren Reduktion der Wellenleiterverluste.

Eine weitere Ausführungsvariante ist dadurch gekennzeichnet, dass für das Verhältnis der NE-Innenraumhöhe H_NE, multipliziert mit dem zweifachen NE-Kreisradius NE_R, dividiert durch die Faserkernfläche A_Faser, gilt:

$$\frac{H\_NE * (2 * NE\_R)}{A\_Faser} = [0{,}35; 0{,}7]$$

und zusätzlich für ein Verhältnis der ARE-Innenraumhöhe H_ARE, multipliziert mit einem zweifachen NE-Kreisradius NE_R, dividiert durch die NE-Innenfläche A_NE, gilt:

$$\frac{H\_ARE * (2 * NE\_R)}{A\_NE} = [0{,}2; 1{,}0]$$

Diese Ausführungsvariante zeichnet sich dadurch aus, dass

- die Modenindexdifferenz $\Delta n_{eff}$ (NE) zwischen der Grundmode und der NE-Mode nahe Null ist, und
- die Wellenleiterverluste der Grundmode minimiert sind.

Ein Verfahren zur Herstellung einer Vorform, aus welcher eine antiresonante Hohlkernfaser elongiert werden kann, kann folgende Schritte umfassen:

- Bereitstellen eines Fasermantel-Vorformlings,
- Vorbereiten einer Anzahl von Antiresonanzeinheiten-Vorformlingen,
- Einführen der Antiresonanzeinheiten-Vorformlinge in eine Innenbohrung des Fasermantel-Vorformlings, und
- Bearbeiten einer Anordnung, umfassend den Fasermantel-Vorformling und die Anzahl von Antiresonanzeinheiten-Vorformlingen, durch einen Heißformprozess ausgewählt aus wenigstens einem von Elongieren und Kollabieren.

Unter dem Begriff Heißformprozess wird ein Verfahrensschritt verstanden, bei dem die Temperatur eines Elements durch Wärmeeintrag erhöht wird. Bekannte Heißformprozesse sind etwa flammenbasierte Heißprozesse, welche auf der Oxidation eines exotherm reagierenden Gases basieren. Durch den Heißformprozess kommt es zu einer stoffschlüssigen Verbindung zwischen den Antiresonanzeinheiten-Vorformlingen und der Innenbohrung des Fasermantel-Vorformlings. In der fertigen antiresonanten Hohlkernfaser spiegelt sich diese etwa in dem stoffschlüssigen Verbund zwischen den Antiresonanzeinheiten und der Innenbohrung der Innenseite des Mantels wider.

Eine weitere Ausführungsvariante ist dadurch gekennzeichnet, dass die antiresonante Hohlkernfaser drei, vier, fünf, sechs, sieben oder acht Antiresonanzeinheiten aufweist, insbesondere, dass die antiresonante Hohlkernfaser eine ungerade Anzahl an Antiresonanzeinheiten aufweist. Diese Ausführungsvariante ermöglicht eine weitere Optimierung der Dämpfung der Grundmode.

Eine weitere Ausführungsvariante ist dadurch gekennzeichnet, dass die Antiresonanzeinheiten asymmetrisch an der Innenfläche des Mantels angeordnet sind. Dadurch werden im Kern die Moden höherer Ordnung gedämpft und die Hohlkernfaser über eine kürzere Laufstrecke grundmodig.

Eine weitere Ausführungsvariante ist dadurch gekennzeichnet, dass die mindestens eine der Antiresonanzeinheiten wenigstens eines der folgenden Merkmale aufweist:

- das ARE-Element und/oder das NE-Element und/oder das DNE-Element einen amorphen Festkörper, insbesondere ein Glas, insbesondere Quarzglas, umfasst,
- das ARE-Element und/oder das NE-Element und/oder das DNE-Element aus einem amorphen Festkörper, insbesondere einem Glas, insbesondere Quarzglas, besteht,
- dass wenigstens zwei von ARE-Element, NE-Element und DNE-Element materialeinheitlich sind, insbesondere ein Glas mit einem Brechungsindex von mindestens 1,4, insbesondere 1,4 bis 3, insbesondere 1,4 bis 2,8 umfassen oder daraus bestehen, und
- eine Elementwandung von wenigstens zwei von ARE-Element, NE-Element und DNE-Element im Wesentlichen gleich sind.

Diese Ausführungsvarianten der Antiresonanzeinheiten sind optimiert auf eine verlustarme Leitung von Signalen bei einer Wellenlänge zwischen 0,3 μm und 3,0 μm, insbesondere zwischen 1,0 μm und 2,5 μm.

Eine weitere Ausführungsvariante ist dadurch gekennzeichnet, dass die antiresonante Hohlkernfaser wenigstens eines der folgenden Merkmale aufweist:

- eine fundamentale Dämpfung von weniger als 1,0 dB/km, insbesondere von weniger als 0,25 dB/km, insbesondere von weniger als 0,1 dB/km bei einer transportierten Wellenlänge zwischen 0,3 $\mu$m und 3,0 $\mu$m, insbesondere zwischen 1,0 $\mu$m und 2,5 $\mu$m, und
- eine fundamentale Dämpfung von weniger als 1 dB/km bei einer transportierten Wellenlänge von bis zu 0,8 $\mu$m.

Diese Ausführungsvariante der antiresonanten Hohlkernfaser eignet sich aufgrund der geringen Dämpfung der Grundmode besonders für die Nutzung in Datencentern.

Eine weitere Ausführungsvariante ist dadurch gekennzeichnet, dass die mindestens eine Antiresonanzeinheit wenigstens eines der folgenden Merkmale aufweist:

- eine Wandstärke einer ARE-Elementwandung des ARE-Elements und/oder einer NE-Elementwandung des NE-Elements und/oder einer DNE-Elementwandung des DNE-Elements beträgt zwischen 0,1 $\mu$m und 2,5 $\mu$m, insbesondere zwischen 0,15 $\mu$m und 1,5 $\mu$m, insbesondere zwischen 0,25 $\mu$m und 0,75 $\mu$m, insbesondere zwischen 0,35 $\mu$m und 0,65 $\mu$m, insbesondere 0,5 $\mu$m,
- eine Wandstärke einer ARE-Elementwandung des ARE-Elements und/oder einer NE-Elementwandung des NE-Elements und/oder einer DNE-Elementwandung des DNE-Elements beträgt bei einer Signalwellenlänge von 1550 nm im ersten Transmissionsfenster zwischen 0,35 $\mu$m und 0,65 $\mu$m, insbesondere zwischen 0,4 $\mu$m und 0,6 $\mu$m, insbesondere 0,5 $\mu$m,
- eine Wandstärke einer ARE-Elementwandung des ARE-Elements und/oder einer NE-Elementwandung des NE-Elements und/oder einer DNE-Elementwandung des DNE-Elements beträgt bei einer Signalwellenlänge von 1550 nm im zweiten Transmissionsfenster zwischen 0,75 $\mu$m und 1,25 $\mu$m, insbesondere zwischen 0,9 $\mu$m und 1,1 $\mu$m, insbesondere 1 $\mu$m.

Bei einer antiresonanten Hohlkernfaser, die insbesondere ein DNE-Element mit einer der angegebenen Wandstärken aufweist und insbesondere bei einer transportierten Wellenlänge zwischen 0,3 $\mu$m und 3,0 $\mu$m, insbesondere zwischen 1,0 $\mu$m und 2,5 $\mu$m, ergibt sich ein breiter Spektralbereich mit geringen Wellenleiterverlusten.

Eine weitere Ausführungsvariante ist dadurch gekennzeichnet, dass der Kernradius R_Faser wenigstens eines der folgenden Merkmale aufweist:

- kleiner oder gleich 26 $\mu$m, insbesondere kleiner oder gleich 23 $\mu$m, insbesondere kleiner oder gleich 20 $\mu$m; und
- größer oder gleich 10 $\mu$m, insbesondere größer oder gleich 12 $\mu$m, insbesondere größer oder gleich 14 $\mu$m.

Eine weitere Ausführungsvariante ist dadurch gekennzeichnet, dass das ARE-Element wenigstens eines der folgenden Merkmale aufweist:

- der erste Kreisradius R_ARE kleiner oder gleich 30 $\mu$m, insbesondere kleiner oder gleich 25 $\mu$m, insbesondere kleiner oder gleich 22,5 $\mu$m, insbesondere kleiner oder gleich 16 $\mu$m ist; und
- der erste Kreisradius R_ARE größer oder gleich 5 $\mu$m, insbesondere größer oder gleich 7 $\mu$m, insbesondere größer oder gleich 11,5 $\mu$m, insbesondere größer oder gleich 12,25 $\mu$m ist, insbesondere größer oder gleich 14,5 $\mu$m ist.

Bei antiresonanten Hohlkernfasern, die einen der oben aufgeführten ersten Kreisradien R_ARE aufweisen, ist ein besonders effektives Zusammenwirken der Moden höherer Ordnung im Kern mit jenen im ARE-Element zu beobachten, was in einer betraglich kleinen Differenz des effektiven Modenindex $\Delta$ neff (ARE) resultiert. Dies gilt insbesondere, wenn die antiresonante Hohlkernfaser einen der oben aufgeführten Kernradien R_Faser aufweist.

Eine weitere Ausführungsvariante ist dadurch gekennzeichnet, dass das NE-Element wenigstens eines der folgenden Merkmale aufweist:

- der zweite Kreisradius R_NE kleiner oder gleich als 25 $\mu$m, insbesondere kleiner oder gleich als 19 $\mu$m, insbesondere kleiner oder gleich 17 $\mu$m ist,
- der zweite Kreisradius R_NE größer oder gleich 1,5 $\mu$m, insbesondere größer als 2,5 $\mu$m, insbesondere größer oder gleich 3,5 $\mu$m ist,
- ein Mittelpunktswinkel MW_NE kleiner 340°, insbesondere kleiner 330°, insbesondere kleiner 320° ist; und
- ein Mittelpunktswinkel MW_NE größer 180°, insbesondere größer 200°, insbesondere größer 230° ist.

Bei antiresonanten Hohlkernfasern, die einen der oben aufgeführten zweiten Kreisradien R_NE und/oder Mittelpunktswinkel MW_NE aufweisen, ist ein besonders effektives Zusammenwirken der Moden höherer Ordnung im Kern mit jenen im NE-Element zu beobachten, was in einer betraglich kleinen Differenz des effektiven Modenindex $\Delta$ neff (NE) resultiert. Dies gilt insbesondere, wenn die antiresonante Hohlkernfaser einen der oben aufgeführten Kernradien R_Faser und/oder einen der oben aufgeführten ersten Kreisradien R_ARE aufweist.

Eine weitere Ausführungsvariante ist dadurch gekennzeichnet, dass das DNE-Element wenigstens eines der folgenden Merkmale aufweist:

- die längste Querschnittsachse AL kleiner oder gleich 20 $\mu$m, insbesondere kleiner oder gleich 16,5 $\mu$m, insbesondere kleiner oder gleich 14,6 $\mu$m ist;
- der längste Querschnittsachse AL größer oder gleich 4 $\mu$m, insbesondere größer oder gleich 6,5 $\mu$m, insbesondere größer oder gleich 8 $\mu$m ist;
- die kürzeste Querschnittsachse AK kleiner oder gleich 12 $\mu$m, insbesondere kleiner oder gleich 9,5 $\mu$m, insbesondere kleiner oder gleich 8 $\mu$m ist; und
- der kürzeste Querschnittsachse AK größer oder gleich 1,5 $\mu$m, insbesondere größer oder gleich 2,5 $\mu$m, insbesondere größer oder gleich 4 $\mu$m ist.

Bei antiresonanten Hohlkernfasern, die wenigstens eine Antiresonanzeinheit mit einem ARE-Element aufweisen, welches wenigstens eines der aufgelisteten Merkmale aufweist, ist ein besonders effektives Zusammenwirken der Moden höherer Ordnung im Kern mit jenen im ARE-Element zu beobachten, was in einer betraglich kleinen Differenz des effektiven Modenindex $\Delta$ neff (ARE) resultiert. Dies gilt insbesondere, wenn die antiresonante Hohlkernfaser einen der oben aufgeführten Kernradien R_Faser und/oder einen der oben aufgeführten ersten Kreisradien R_ARE aufweist.

Eine weitere Ausführungsvariante ist dadurch gekennzeichnet, dass mehr als 70 % der Antiresonanzeinheiten, insbesondere alle Antiresonanzeinheiten, eine Ausgestaltung gemäß einer der beschriebenen Ausführungsvarianten aufweisen. Die Antiresonanzeinheiten können dabei alle einheitlich oder auch gemäß unterschiedlicher Ausführungsvarianten ausgestaltet sein. Eigenschaften und Merkmale verschiedener Ausführungsvarianten können dabei sowohl getrennt als auch in beliebiger Kombination miteinander verbunden sein.

Die in der Beschreibung offenbarten Eigenschaften und Merkmale können für verschiedene Ausgestaltungsformen der beanspruchten Erfindung sowohl getrennt als auch in beliebiger Kombination miteinander wesentlich sein.

Die Erfindung wird im Folgenden durch Figuren weiter beispielhaft illustriert. Die Erfindung ist nicht auf die Figuren beschränkt.

**Figuren**

Es zeigen

Fig. 1        ein rohrartig ausgestaltetes ARE-Element,

Fig. 2        ein kreisbogenartig ausgestaltetes NE-Element,

Fig. 3        ein oval ausgestaltetes DNE-Element,

Fig. 4        das oval ausgestaltete DNE-Element aus Fig. 3,

Fig. 5a       eine Antiresonanzeinheit, aufweisend das ARE-Element aus Fig.1, das NE-Element aus Fig. 2 und das DNE-Element aus Fig. 3,

Fig. 5b       eine Ausschnittsvergrößerung der Antiresonanzeinheit aus Fig. 5a,

Fig. 5c       eine weitere Ausschnittsvergrößerung der Antiresonanzeinheit aus Fig. 5a,

Fig. 6        einen Querschnitt durch einen Teil einer antiresonanten Hohlkernfaser mit der Antiresonanzeinheit aus Fig. 5,

Fig. 7        einen Querschnitt durch die antiresonante Hohlkernfaser mit einer Mehrzahl an Antiresonanzeinheiten,

Fig. 8        ein Diagramm einer Differenz eines effektiven Modenindex $\Delta$ neff (NE), aufgetragen als Funktion eines Verhältnisses einer NE-Innenraumhöhe H_NE, multipliziert mit einem zweifachen NE-Kreisradius NE_R, dividiert durch eine Faserkernfläche A_Faser,

Fig. 9     ein Diagramm eines Wellenleiterverlusts einer Grundmode (auch Fundamental Mode; FM), aufgetragen als Funktion eines Verhältnisses der NE-Innenraumhöhe H_NE, multipliziert mit dem zweifachen NE-Kreisradius NE_R, dividiert durch die Faserkernfläche A_Faser,

Fig. 10    ein Diagramm einer Differenz des effektiven Modenindex ∆ neff (ARE), aufgetragen als Funktion eines Verhältnisses einer ARE-Innenraumhöhe H_ARE, dividiert durch einen Kernradius R_Faser

Fig. 11    ein Diagramm eines Wellenleiterverlusts der Grundmode, aufgetragen als Funktion eines Verhältnisses der ARE-Innenraumhöhe H_ARE, multipliziert mit dem zweifachen NE-Kreisradius NE_R, dividiert durch eine NE-Innenfläche A_NE.

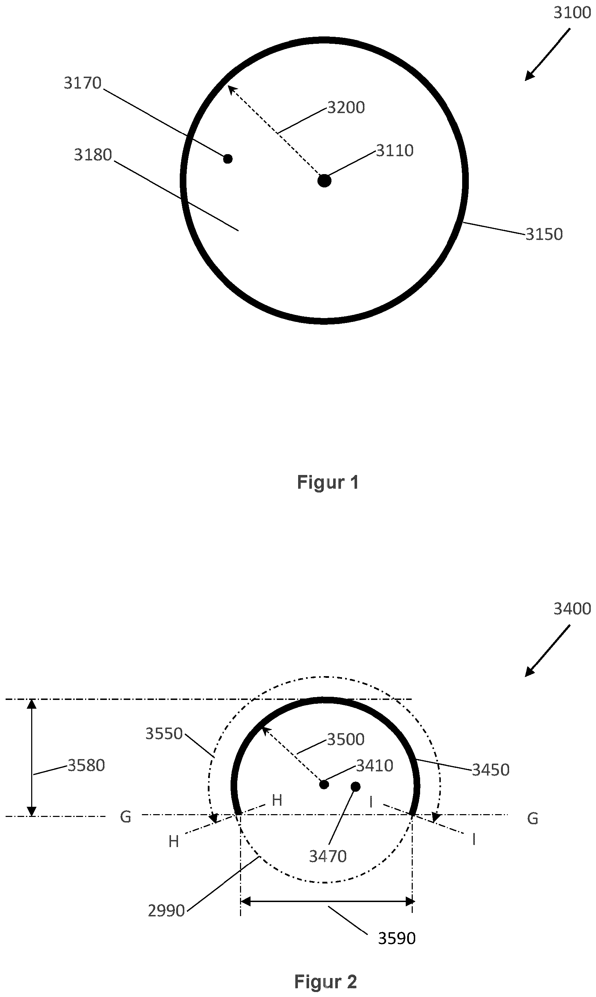

Die **Figur 1** zeigt einen Querschnitt durch ein ARE-Element 3100. Das ARE-Element 3100 ist eine rohrartige Struktur, die einen kreisartigen oder kreisförmigen Querschnitt aufweist. Das ARE-Element 3100 erstreckt sich entlang einer ersten Körperlängsachse 3110. In Figur 1 erstreckt sich das ARE-Element 3100 folglich in die Zeichnungsebene. Aufgrund seines kreisartigen oder kreisförmigen Querschnitts besitzt das ARE-Element 3100 einen ersten Kreisradius R_ARE 3200.

Das ARE-Element 3100 weist eine ARE-Elementwandung 3150 auf. Die ARE-Elementwandung 3150 umschließt einen ersten Innenraum 3170. Der erste Innenraum 3170 weist eine ARE-Innenfläche 3180 auf. Die ARE-Innenfläche 3180 ist proportional zum Quadrat des ersten Kreisradius R_ARE 3200.

Eine fertigungstechnisch bedingte Schwankung des ersten Kreisradius R_ARE 3200 beträgt insbesondere nicht mehr als 10 %, bevorzugt nicht mehr als 5 %, weiter bevorzugt nicht mehr als 3 %, bezogen auf die Länge des ersten Kreisradius R_ARE 3200.

Die **Figur 2** zeigt einen Querschnitt durch ein NE-Element 3400. Das NE-Element 3400 ist eine rohrartige Struktur, die einen kreisbogenartigen Querschnitt aufweist. Das NE-Element 3400 erstreckt sich entlang einer zweiten Körperlängsachse 3410. In Figur 2 erstreckt sich das NE-Element 3400 in die Zeichnungsebene.

Wie der in Figur 2 gezeigte Querschnitt verdeutlicht, weist das NE-Element 3400 einen kreisbogenartigen Querschnitt auf. Unter dem Begriff "Kreisbogen" wird im Rahmen der Erfindung ein Teilstück einer Kreislinie verstanden. Zwei Punkte auf einem Kreis teilen die Kreislinie in zwei Kreisbögen. Im Rahmen dieser Erfindung wird ein Element als "kreisbogenartig" beschreiben, wenn seine äußere Form dem Verlauf eines der besagten zwei Kreisbögen folgt. Zur Verdeutlichung ist in Figur 2 ein Kreis 2990 eingezeichnet. Dieser Kreis 2990 wird durch die beiden Schnittlinien H-H und I-I in zwei Kreisbögen aufgeteilt. Der Querschnitt des NE-Elements 3400 folgt einem der beiden Kreisbögen.

Weiterhin ist eine Schnittlinie G-G eingezeichnet, welche durch die beiden Schnittpunkte der beiden Schnittlinien H-H und I-I mit dem Kreis 2990 verläuft. Als Sehne der NE-Inneneinheit 3400 wird jene Strecke bezeichnet, die auf der Schnittlinie G-G liegt und durch die Schnittlinien H-H und I-I begrenzt ist. Als Sehnenlänge 3590 wird die Länge der Sehne bezeichnet.

Das NE-Element 3400 weist eine NE-Elementwandung 3450 auf. Das NE-Element 3400 weist einen zweiten Kreisradius R_NE 3500 auf. Dieser zweite Kreisradius R_NE 3500 beschreibt den Abstand der NE-Elementwandung 3450 zur zweiten Körperlängsachse 3410.

Eine fertigungstechnisch bedingte Schwankung des zweiten Kreisradius R_NE 3500 beträgt insbesondere nicht mehr als 10 %, bevorzugt nicht mehr als 5 %, weiter bevorzugt nicht mehr als 3 %, bezogen auf die Länge des zweiten Kreisradius R_NE 3500.

Das NE-Elements 3400 weist eine Segmenthöhe SH_NE 3580 auf. Diese Segmenthöhe SH_NE 3580 beschreibt die Länge einer Geraden, die senkrecht auf der Sehne steht und bis zum Scheitelpunkt der NE-Elementwandung 3450 läuft.

Das NE-Element 3400 weist einen Mittelpunktswinkel MW_NE 3550 auf. Dieser Mittelpunktswinkel MW_NE 3550 beschreibt den Winkel, dessen Scheitel im Mittelpunkt des Kreises 2990 liegt und dessen Schenkel die Begrenzungspunkte des Kreisbogens schneiden (hier die Schnittpunkte des Kreises 2990 mit den Schnittlinien H-H und I-I). Ein Vollkreis weist eine Gradzahl von 360° auf. Da das NE-Elements 3400 kreisbogenartig ausgestaltet ist, ist der Mittelpunktswinkel MW_NE 3550 kleiner als 360°.

Das NE-Element 3400 weist einen durch die NE-Elementwandung 3450 und die Sehne begrenzten zweiten Innenraum 3470 auf.

Eine Ausführungsvariante zeichnet sich dadurch aus, dass das NE-Element 3400 wenigstens eines der folgenden Merkmale aufweist:

- der zweite Kreisradius R_NE 3500 kleiner oder gleich als 25 µm, insbesondere kleiner oder gleich als 19 µm, insbesondere kleiner oder gleich 17 µm ist,
- der zweite Kreisradius R_NE 3500 größer oder gleich 1,5 µm, insbesondere größer als 2,5 µm, insbesondere größer oder gleich 3,5 µm ist,

- der Mittelpunktswinkel MW_NE 3550 kleiner 340°, insbesondere kleiner 330°, insbesondere kleiner 320° ist; und
- der Mittelpunktswinkel MW_NE 3550 größer 180°, insbesondere größer 200°, insbesondere größer 230° ist.

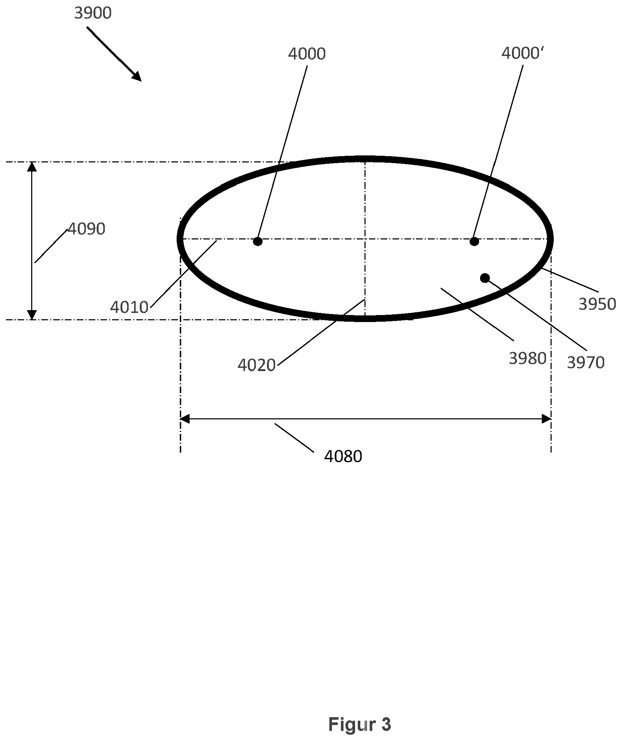

Die **Figur 3** zeigt einen Querschnitt durch ein DNE-Element 3900. Das DNE-Element 3900 ist eine rohrartige Struktur, die einen ovalen Querschnitt aufweist. In Figur 2 erstreckt sich das DNE-Element 3900 folglich in die Zeichnungsebene.

Das DNE-Element 3900 weist eine DNE-Elementwandung 3950 auf. Die DNE-Elementwandung 3950 umschließt einen dritten Innenraum 3970. Der dritte Innenraum 3970 weist eine DNE-Innenfläche 3980 auf.

Das DNE-Element 3900 ist im Querschnitt oval ausgestaltet. Unter dem Begriff "oval" wird im Rahmen der Erfindung eine ebene rundliche konvexe Form verstanden, die als Spezialfall die Ellipsen umfasst, wobei eine beliebige ovale Form im Gegensatz zu der Ellipse keine Symmetrieachse besitzen muss.

Das DNE-Element 3900 weist eine längste Querschnittsachse AL 4010 und eine kürzeste Querschnittsachse AK 4020 auf. Dabei bezeichnet

- die längste Querschnittsachse AL 4010 die längste gerade Erstreckung zwischen zwei Punkten auf der DNE-Elementwandung 3950, und
- die kürzeste Querschnittsachse AK 4020 die kürzeste gerade Erstreckung zwischen zwei Punkten auf der DNE-Elementwandung 3950.

In einer weiteren Ausführungsvariante sind die längste Querschnittsachse AL 4010 und/oder die kürzeste Querschnittsachse AK 4020 Symmetrieachsen des DNE-Elements 3900.

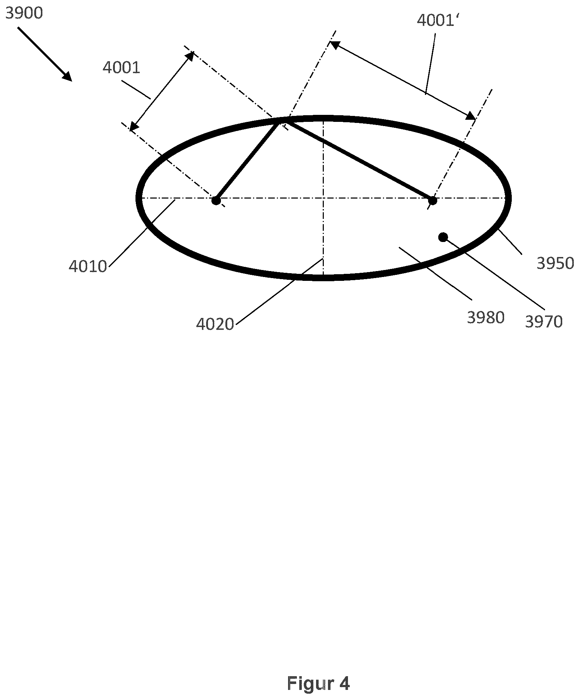

Die **Figur 4** dient der Verdeutlichung des Verständnisses des Begriffs "oval" und zeigt den in Figur 3 gezeigten Querschnitt durch das DNE-Element 3900. Der ovale Querschnitt des DNE-Element 3900 ist dahingehend begrenzt, dass im Querschnitt eine Summe der Abstände 4001, 4001' eines beliebigen Punktes auf der DNE-Elementwandung 3950 von zwei Brennpunkten 4000,4000' für alle Punkte auf weniger als 15 % der Summe der Abstände 4001, 4001' gleich ist. Dabei sind die Brennpunkte 4000,4000' disjunkt und nicht identisch. Folglich wird für das DNE-Element 3900 ein elliptischer Querschnitt angestrebt, welcher aber aus fertigungstechnischen Gründen nur im Rahmen der aufgeführten Schwankung erreicht wird. Die in Figur 4 gezeigte Ausführungsvariante des DNE-Elements 3900 zeichnet sich dadurch aus, dass die Brennpunkte 4000,4000' auf der längsten Querschnittsachse AL 4010 liegen.

Eine weitere Ausführungsvariante des DNE-Elements 3900 zeichnet sich dadurch aus, dass im Querschnitt die Summe der Abstände 4001, 4001' eines beliebigen Punktes auf der DNE-Elementwandung 3950 von zwei Brennpunkten 4000,4000', welche insbesondere auf der längsten Querschnittsachse AL 4010 liegen, für alle Punkte auf weniger als 10 %, insbesondere weniger als 5 % der Summe der Abstände 4001, 4001', gleich ist.

Überraschenderweise hat sich herausgestellt, dass ein DNE-Element 3900 mit einem ovalen Querschnitt die Transmissionseigenschaften einer antiresonanten Hohlkernfaser 1000 positiv beeinflusst. Eine Ausführungsvariante des DNE-Elements 3900 zeichnet sich dadurch aus, dass für ein Verhältnis der längsten Querschnittsachse AL 4010 zur kürzesten Querschnittsachse AK 4020 gilt:

$$AL/AK = [1,1; 4,0]$$

Diese Ausführungsvariante führt zu einer Optimierung der Wellenleiterverluste.

Eine weitere Ausführungsvariante ist dadurch gekennzeichnet, dass für das Verhältnis der längsten Querschnittsachse AL 4010 zur kürzesten Querschnittsachse AK 4020 gilt:

- größer oder gleich 1,15, insbesondere größer oder gleich 1,20, insbesondere größer oder gleich 1,25, insbesondere größer oder gleich 1,50; und
- kleiner oder gleich 3,80, insbesondere kleiner oder gleich 3,60, insbesondere kleiner oder gleich 3,50.

Durch die Nutzung eines DNE-Elements 3900, welches einen ovalen Querschnitt aufweist, der die oben beschriebenen Verhältnisse besitzt, können die Wellenleiterverluste reduziert werden.

Eine weitere Ausführungsvariante ist dadurch gekennzeichnet, dass das DNE-Element 3900 wenigstens eines der folgenden Merkmale aufweist:

- die längste Querschnittsachse AL 4010 kleiner oder gleich 20 $\mu$m, insbesondere kleiner oder gleich 16,5 $\mu$m, insbesondere kleiner oder gleich 14,6 $\mu$m ist;
- der längste Querschnittsachse AL 4010 größer oder gleich 4 $\mu$m, insbesondere größer oder gleich 6,5 $\mu$m, insbesondere größer oder gleich 8 $\mu$m ist;
- die kürzeste Querschnittsachse AK 4020 kleiner oder gleich 12 $\mu$m, insbesondere kleiner oder gleich 9,5 $\mu$m,

insbesondere kleiner oder gleich 8 μm ist; und

- der kürzeste Querschnittsachse AK 4020 größer oder gleich 1,5 μm, insbesondere größer oder gleich 2,5 μm, insbesondere größer oder gleich 4 μm ist.

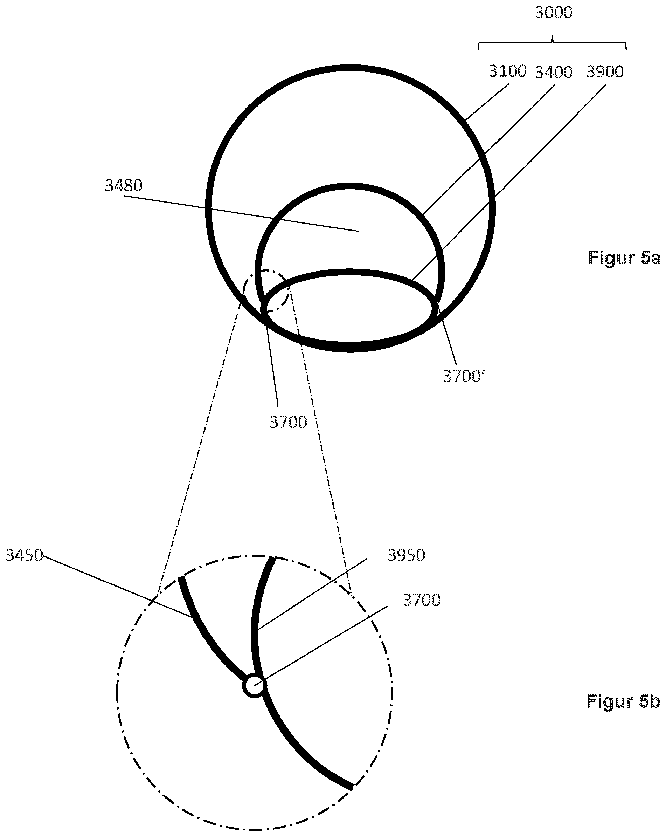

Die **Figur 5a** zeigt einen Querschnitt durch eine Antiresonanzeinheit 3000, welche das ARE-Element 3100, das NE-Element 3400, sowie das DNE-Element 3900 umfasst. Das NE-Element 3400 und das DNE -Element 3900 sind innerhalb des ersten Innenraums 3170 des ARE-Elements 3100 angeordnet. Das oval ausgestaltete DNE-Element 3900 ragt zumindest partiell in den zweiten Innenraum 3470 des kreisbogenartigen NE-Elements 3400 hinein. Darunter wird verstanden, dass - im Querschnitt - das DNE-Element 3900 zumindest teilweise oberhalb der Sehne des NE-Elements 3400 verläuft.

Das NE-Element 3400 weist eine NE-Innenfläche A_NE 3480 auf. Diese ist durch die NE-Elementwandung 3450 und die DNE-Elementwandung 3950 begrenzt. Folglich sind NE-Innenfläche A_NE 3480 und zweiter Innenraum 3470 nicht genau deckungsgleich.

Das kreisbogenartig ausgestaltete NE-Element 3400 und das oval ausgestaltete DNE-Element 3900 sind entlang zweier im Wesentlichen parallel zu der ersten Körperlängsachse 3110 angeordneten Verbindungsnähte 3700, 3700' miteinander verbunden. Dieser Verbund kann insbesondere durch einen Heißprozess erfolgt sein.

Zur Verdeutlichung ist in **Figur 5b** ein Bereich um die Verbindungsnaht 3700 vergrößert dargestellt. Dabei ergibt sich, dass

- die Verbindungsnähte 3700 als Verbund zwischen einem ersten Endpunkt der NE-Elementwandung 3450 und einem ersten Punkt auf der DNE-Elementwandung 3950, und
- die Verbindungsnähte 3700' als Verbund zwischen einem zweiten Endpunkt der NE-Elementwandung 3450 und einem zweiten Punkt auf der DNE-Elementwandung 3950 entsteht.

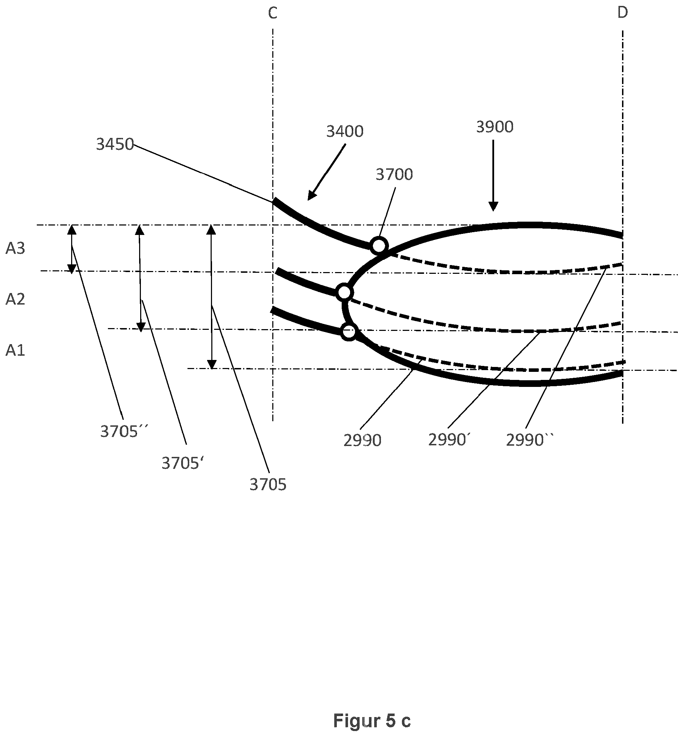

Analog zu Figur 5b zeigt **Figur 5c** einen Teil des kreisbogenartig ausgestalteten NE-Elements 3400 und das oval ausgestaltete DNE-Element 3900, begrenzt durch die Schnittlinien C und D. Dargestellt sind drei beispielhafte Positionen A1, A2, A3 des jeweils ersten Endpunkts der NE-Elementwandung 3450 auf der DNE-Elementwandung 3950.

Jede der drei Positionen A1, A2, A3 weist eine Verbindungshöhe 3705, 3705', 3705" auf. Die Verbindungshöhe 3705, 3705', 3705" ergibt sich aus einer Distanz von einer Oberkante des DNE-Elements 3900 zu dem jeweiligen Kreis 2990, 2990', 2990".

Zur Verdeutlichung wird die Verbindungshöhe 3705" für die Position A3 näher beschrieben. Die Verbindungshöhe 3705" ergibt sich aus der Distanz zwischen den folgenden zwei Elementen:

- Die Oberkante des DNE-Elements 3900: Die Oberkante kann der Schnittpunkt der kürzeste Querschnittsachse AK 4020 mit der DNE-Elementwandung 3950 sein (vgl. auch Figur 3).
- Dem Kreis 2990" des jeweiligen NE-Elements 3400: Zur Verdeutlichung des kreisbogenartigen Querschnitts des NE-Elements 3400 ist in Figur 2 ein Kreis 2990 eingezeichnet. Dieser Kreis 2990 wird durch die beiden Schnittlinien H-H und I-I in zwei Kreisbögen aufgeteilt. Der Querschnitt des NE-Elements 3400 folgt einem der beiden Kreisbögen.

Die Verbindungshöhe 3705" für die Position A3 entspricht folglich nicht die Distanz zwischen einer Ebene, die durch die Verbindungsnähte 3700,3700' aufgespannt wird, und der Oberkante des DNE-Elements 3900. Vielmehr ist die Verbindungshöhe 3705" größer als besagte Distanz zu der Ebene, die durch die Verbindungsnähte 3700,3700' aufgespannt wird.

Bei einer Verbindungshöhe 3705, 3705', 3705" von Null würden sich das NE Element 3400 und das DNE-Element 3900 in nur einem Punkt berühren und das NE Element quasi ein Kreis bilden. Um den kreisbogenartigen Querschnitt des NE-Elements 3400 sicherzustellen, ist folglich die Verbindungshöhe 3705, 3705', 3705" für die Hohlkernfaser 1000 größer Null. Die Verbindungshöhe 3705, 3705', 3705" kann in einer Ausführungsvariante zwischen 1,25 μm bis 5,75 μm betragen.

Da in Figur 5a,b,c jeweils ein Querschnitt der Antiresonanzeinheit 3000 dargestellt ist, verlaufen in einer dreidimensionalen Darstellung der Hohlkernfaser 1000 die beiden Verbindungsnähte 3700, 3700' in die Zeichnungsebene hinein.

Die Figuren 1 bis 5a,b,c zeigen die Antiresonanzeinheit 3000, das ARE-Element 3100, das NE-Element 3400, sowie das DNE-Element 3900, jeweils in einem Querschnitt, also einer axialen Ansicht. In einer dreidimensionalen Betrachtung liegen die Antiresonanzeinheit 3000, das ARE-Element 3100, das NE-Element 3400, sowie das DNE-Element 3900 folglich jeweils als eine längliche und/oder rohrartige Struktur vor.

Das ARE-Element 3100 und/oder das NE-Element 3400 und/oder das DNE-Element 3900 können einen amorphen Festkörper, insbesondere ein Glas, insbesondere Quarzglas, umfassen und/oder daraus bestehen. Die in Figur 5 dargestellte Antiresonanzeinheit 3000 kann wenigstens eines der folgenden Merkmale aufweisen:

- eine Wandstärke der ARE-Elementwandung 3150 des ARE-Elements 3100 und/oder der NE-Elementwandung 3450 des NE-Elements 3400 und/oder der DNE-Elementwandung 3950 des DNE-Elements 3900 beträgt zwischen 0,1 $\mu$m und 2,5 $\mu$m, insbesondere zwischen 0,15 $\mu$m und 1,5 $\mu$m, insbesondere zwischen 0,25 $\mu$m und 0,75 $\mu$m, insbesondere zwischen 0,35 $\mu$m und 0,65 $\mu$m, insbesondere 0,5 $\mu$m,
- eine Wandstärke der ARE-Elementwandung 3150 des ARE-Elements 3100 und/oder der NE-Elementwandung 3450 des NE-Elements 3400 und/oder der DNE-Elementwandung 3950 des DNE-Elements 3900 beträgt bei einer Signalwellenlänge von 1550 nm im ersten Transmissionsfenster zwischen 0,35 $\mu$m und 0,65 $\mu$m, insbesondere zwischen 0,4 $\mu$m und 0,6 $\mu$m, insbesondere 0,5 $\mu$m,
- eine Wandstärke der ARE-Elementwandung 3150 des ARE-Elements 3100 und/oder der NE-Elementwandung 3450 des NE-Elements 3400 und/oder der DNE-Elementwandung 3950 des DNE-Elements 3900 beträgt bei einer Signalwellenlänge von 1550 nm im zweiten Transmissionsfenster zwischen 0,75 $\mu$m und 1,25 $\mu$m, insbesondere zwischen 0,9 $\mu$m und 1,1 $\mu$m, insbesondere 1 $\mu$m.

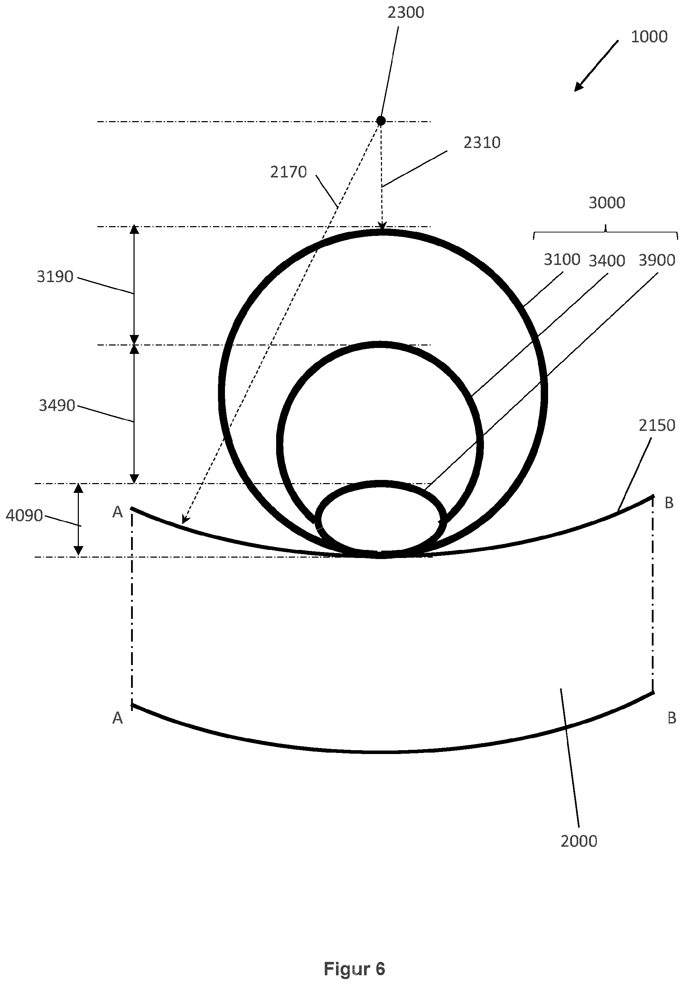

Die **Figur 6** zeigt einen Querschnitt durch einen Teil einer antiresonanten Hohlkernfaser 1000. Dargestellt ist ein Abschnitt der antiresonanten Hohlkernfaser 1000 zwischen zwei Schnittlinien A-A und B-B. Die antiresonante Hohlkernfaser 1000 weist einen Fasermantel 2000 (auch als Mantel bezeichnet) auf. Der Fasermantel 2000 kann einstückig aus einem elongierten Mantelmaterial oder aus einem elongierten Hüllrohr in Kombination mit einem elongierten Mantelmaterial aufgebaut sein. Der Fasermantel 2000 weist einen Mantelinnenradius 2170 auf, welcher sich aus der Distanz einer Faser-Längsachse 2300 der antiresonanten Hohlkernfaser 1000 zu einer Innenseite 2150 des Mantels 2000 ergibt. Auf der Innenseite 2150 ist eine Antiresonanzeinheit 3000 angeordnet. Die Antiresonanzeinheit 3000 ist stoffschlüssig mit dem Fasermantel 2000 verbunden. Die Antiresonanzeinheit 3000 entspricht insbesondere jener in Figur 5a gezeigten.

Das ARE-Element 3100 ist kreisförmig ausgestaltet. Abweichungen der ARE-Elementwandung 3150 und/oder des ersten Kreisradius R_ARE 3200 von der idealen Kreisform basieren insbesondere auf fertigungsbedingten Schwankungen. Insbesondere kann der erste Kreisradius R_ARE 3200 nicht mehr als 15 %, insbesondere nicht mehr als 10 %, insbesondere nicht mehr als 3 % von einem mittleren ersten Kreisradius R_ARE 3200 des ARE-Element 3100 abweichen, insbesondere sowohl azimutal über einen Kreis - so dass ein ovaler Verlauf entsteht - als auch an axial unterschiedlichen Stellen der antiresonanten Hohlkernfaser 1000.

Das NE-Element 3400 ist kreisbogenartig ausgestaltet. Abweichungen der NE-Elementwandung 3450 und/oder des zweiten Kreisradius R_NE 3500 von der idealen Kreisbogenform basieren insbesondere auf fertigungsbedingten Schwankungen. Insbesondere kann der zweite Kreisradius R_NE 3500 nicht mehr als 15 %, insbesondere nicht mehr als 10 %, insbesondere nicht mehr als 3 % von einem mittleren zweiten Kreisradius R_NE 3500 abweichen, insbesondere sowohl azimutal über einen Kreisbogen - so dass ein ovaler Verlauf entsteht - als auch an axial unterschiedlichen Stellen der antiresonanten Hohlkernfaser 1000.

Die Antiresonanzeinheit 3000 umfasst das ARE-Element 3100, das NE-Element 3400 sowie das DNE-Element 3900. Ein Betrag des Mantelinnenradius 2170 entspricht der Summe aus:

- einem Kernradius R_Faser 2310, welcher sich aus der kürzesten Distanz zwischen der Faser-Längsachse 2300 und der Antiresonanzeinheit 3000 ergibt,
- einer ARE-Innenraumhöhe H_ARE 3190, welche sich aus der Distanz zwischen der ARE-Elementwandung 3150 und der NE-Elementwandung 3450 in der Linie zur Faser-Längsachse 2300 ergibt,
- einer NE-Innenraumhöhe H_NE 3490, welche sich aus der Distanz zwischen der NE-Elementwandung 3450 und der DNE-Elementwandung 3950 in der Linie zur Faser-Längsachse 2300 ergibt, und
- der Länge der kürzesten Querschnittsachse AK 4090., und
- der Summe der Wandstärken der ARE-Elementwandung 3150, der NE-Elementwandung 3450 und der DNE-Elementwandung 3950.

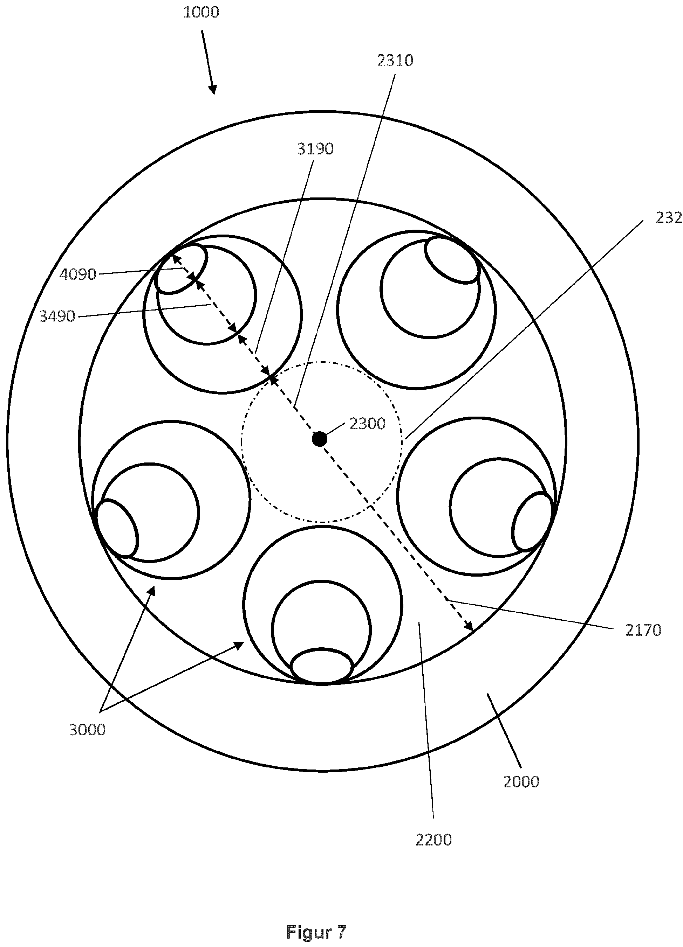

Die **Figur 7** zeigt einen Querschnitt durch die antiresonante Hohlkernfaser 1000. Die antiresonante Hohlkernfaser 1000 weist einen hohlen Kern auf, durch welchen eine elektromagnetische Welle propagieren kann. Der hohle Kern weist den Kernradius 2310 und eine Faserkernfläche A_Faser 2320 auf. Der Fasermantel 2000 weist einen kreisförmigen Querschnitt auf und ist rohrartig ausgestaltet. Insofern umschließt der Fasermantel 2000 eine Innenbohrung 2200, in welcher die Antiresonanzeinheiten 3000 angeordnet sind.

Eine Ausführungsvariante zeichnet sich dadurch aus, dass der Kernradius R_Faser 2310 wenigstens eines der folgenden Merkmale aufweist:

- kleiner oder gleich 26 $\mu$m, insbesondere kleiner oder gleich 23 $\mu$m, insbesondere kleiner oder gleich 20 $\mu$m; und
- größer oder gleich 10 $\mu$m, insbesondere größer oder gleich 12 $\mu$m, insbesondere größer oder gleich 14 $\mu$m.

Die Figur 7 verdeutlicht die Anordnung der Mehrzahl an Antiresonanzeinheiten 3000 auf der Innenseite 2150. In einer Ausführungsvariante kann die antiresonante Hohlkernfaser 1000 drei, vier, fünf, sechs, sieben oder acht Antiresonanzeinheiten 3000 aufweisen. In Figur 7 weist die antiresonante Hohlkernfaser 1000 fünf Antiresonanzeinheiten 3000 auf. In dieser Ausführungsvariante sind die Antiresonanzeinheiten 3000 asymmetrisch an der Innenseite 2150 des Mantels 2000 angeordnet.

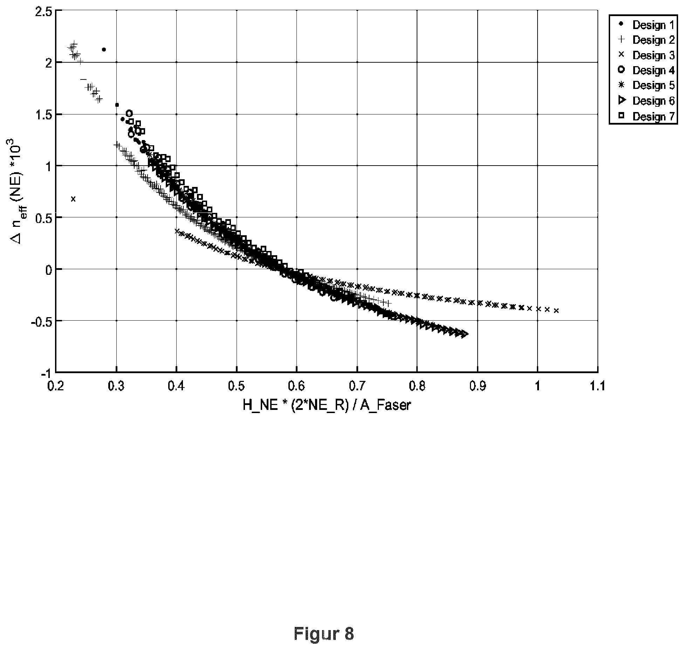

Die **Figuren 8 bis 11** zeigen die Ergebnisse von Simulationen der antiresonanten Hohlkernfaser 1000. Für die numerischen Berechnungen wurde ein Moden-Solver der Finite-Elemente-Methode im Programm COMSOL Multiphysics verwendet. Dabei wurde eine perfekt angepasste Schicht (perfectly matched layer PML) mit einer Dicke von 10 μm an der äußeren Grenzfläche der optischen Faser implementiert, um die Abstrahleigenschaften der Wellenleiterstruktur zu untersuchen, indem die radial abgestrahlte Lichtenergie absorbiert wird.

Die Ausgangsbasis für die Simulationen war eine antiresonante Hohlkernfaser 1000. Diese antiresonante Hohlkernfaser 1000 umfasst die Faser-Längsachse 2300, den Faserkernradius R_Faser 2310, den Fasermantel 2000, welcher die Innenbohrung 2200 aufweist. Weiterhin umfasst die antiresonante Hohlkernfaser 1000 fünf Antiresonanzeinheiten 3000, jeweils umfassend

- ein ARE-Element 3100,
- ein NE-Element 3400,
- ein DNE-Element 3900,

Dabei sind die Antiresonanzeinheiten 3000 zueinander beabstandet und zueinander kontaktfrei an Soll-Positionen an einer Innenseite 2150 der Innenbohrung 2200 angeordnet.

Wobei in jeder Antiresonanzeinheit 3000

- das ARE-Element 3100 einen kreisförmigen Querschnitt aufweist,
- das NE-Element 3400 in einem ersten Innenraum 3170 des ARE-Elements 3100 angeordnet ist, und
- das DNE-Element 3900 zumindest teilweise in einen zweiten Innenraum 3470 des NE-Elements 3400 angeordnet ist.

Die Antiresonanzeinheiten 3000 in der antiresonante Hohlkernfaser 1000 zeichnen sich dadurch aus, dass

- das DNE-Element 3900 einen ovalen Querschnitt aufweist,
- das NE-Element 3400 einen kreisbogenartigen Querschnitt aufweist und entlang zweier Verbindungsnähten 3700, 3700' mit der DNE-Element 3400 verbunden ist, und
- im Querschnitt eine Summe der Abstände eines beliebigen Punktes auf einer DNE-Elementwandung 3950 von zwei Brennpunkten 4000,4000' für alle Punkte auf weniger als 15 % der Summe der Abstände gleich ist.

Die simulierten antiresonanten Hohlkernfasern 1000 wiesen folgende Eigenschaften auf:

- eine Wandstärke von 500 nm, was insbesondere einem breiten Transmissionsbereich (1. Transmissionsband) um die Signalwellenlänge von 1550 nm entspricht,
- jeweils fünf Antiresonanzeinheiten 3000, und
- die DNE-Elemente besaßen die Kontur einer idealen Ellipse.

Der Tabelle 1 sind weitere Parameter der sieben unterschiedlichen Designs der simulierten antiresonanten Hohlkernfaser 1000 zu entnehmen.

| | Design 1 | Design 2 | Design 3 | Design 4 | Design 5 | Design 6 | Design 7 |
|---|---|---|---|---|---|---|---|
| Kernradius R_Faser 2310 [µm] | 14 | 16 | 20 | 14 | 14 | 14 | 14 |
| Erster Kreis-radius R_ARE 3200 [µm] | 14,5 | 16 | 22,5 | 14,5 | 14,5 | 14,5 | 14,5 |
| zweiter Kreis-radius R_NE 3500 [µm], in 0,5 µm Schritten | [6,0; 12,0] | [6,0; 13,5] | [9,5; 19,0] | [5,5; 11,5] | [5,0; 12,75] (in 0,25 µm Schritte ) | [5,5; 12,5] | [5,5; 12,5] |
| Durchmesser Oval (AL 4010 + AK 4020)/2 [µm] | 9 (AL: 6,0; AK: 3,0) | 9 (AL: 6,0; AK: 3,0) | 11 (AL: 7,33; AK: 3,67) | 9 (AL: 5,0; AK: 4,0) | 9 (AL: 6.75 AK: 2.25) | 6 (AL: 4,0; AK: 2,0) | 11 (AL: 7,33; AK: 3,67) |
| Ovalität (AL 4010 / AK 4020) | 2 | 2 | 2,00 | 1,25 | 3,5 | 2 | 2,00 |
| Eindringtiefe ARE-Element in den Mantel [µm] | 1 | 1 | 1 | 1 | 1 | 1 | 1 |
| Verbindungshöhe 3705, 3705', 3705'' [µm] | [3,25;5,75] Schritt 0,25 | [3,25; 5,75] Schritt 0,25 | [2,5; 6,0] Schritt 0,50 | [4,0; 7.5] Schritt 0,50 | [3,0; 4.75] Schritt 0,25 | [2,0; 3.75] Schritt 0,25 | [5,0; 7.25] Schritt 0,25 |
| Eindringtiefe DNE-Element in den Mantel [µm] | 0,25 | 0,25 | 0,25 | 0,25 | 0,1 | 0,25 | 0,25 |
| Mantelinnenradius 2170 | 42 | 47 | 64 | 42 | 42 | 42 | 42 |

| [µm] | | | | | | | |
|---|---|---|---|---|---|---|---|
| Abstand Antiresonanz-einheiten 3000 [µm] | 4,5 | 5,6 | 4,96 | 4,5 | 4,5 | 4,5 | 4,5 |

Für jedes der insgesamt sieben Designs wurden jeweils eine Mehrzahl an Rechnungen durchgeführt. Variiert wurden dabei die folgenden Parameter:

1. zweiter Kreisradius R_NE 3500, und
2. die Verbindungshöhe 3705, 3705', 3705", also die Position des NE-Element auf dem DNE-Element.

Zu 1.:

Für das ansonsten fest vorgegebene Design wurde der zweite Kreisradius R_NE 3500 in 500 nm Schritten variiert (bis auf Design 5). So beschreibt etwa das für Design 1 aufgeführte Intervall
[3,5; 11,0],
dass im Rahmen der Simulation der zweite Kreisradius R_NE 3500 im Intervall [3,5 $\mu$m; 11,0 $\mu$m] in 0,5 $\mu$m Schritten variiert wurde.

Zu 2.:

Für das ansonsten fest vorgegebene Design wurde die Position des NE-Elements auf dem DNE-Element variiert (vergl. Fig 5c). So beschreibt etwa das für Design 1 aufgeführte Intervall
[1,25; 5,75] Schritt 0,50,
dass die Verbindungshöhe 3705, 3705', 3705" im Rahmen der Simulation in 0,5 $\mu$m Schritten von 1,25 $\mu$m bis 5,75 $\mu$m variiert wurde.

Weitere Parameter sind wie folgt definiert:

- Der Wert "Durchmesser Oval", berechnet aus dem arithmetischen Mittel der längsten Querschnittsachse AL und der kürzesten Querschnittsachse AK:
  ( (AL 4010 + AK 4020)/2 ).
- Der Wert "Ovalität" berechnet sich aus dem Verhältnis der längsten Querschnittsachse AL zur kürzesten Querschnittsachse AK (AL 4010 / AK 4020).
- Die Eindringtiefe ARE-Element in den Mantel beschreibt, dass bei dem Heißprozess das ARE-Element 1 $\mu$m tief in den Mantel eindringt.
- Die Eindringtiefe DNE-Element in den Mantel beschreibt, dass bei dem Heißprozess das DNE-Element 0,25 $\mu$m tief in den Mantel eindringt.

In den Figuren 8 bis 11 sind die Ergebnisse von Simulationen wie folgt eingetragen:

- punktartig gekennzeichnete Ergebnisse basierend auf Design 1,
- kreuzartig gekennzeichnete Ergebnisse basierend auf Design 2,
- x-artig gekennzeichnete Ergebnisse basierend auf Design 3,
- kreisartig gekennzeichnete Ergebnisse basierend auf Design 4,
- sternartig gekennzeichnete Ergebnisse basierend auf Design 5,
- dreieckig gekennzeichnete Ergebnisse basierend auf Design 6, und
- rechteckig gekennzeichnete Ergebnisse basierend auf Design 7.

Ergänzend zu den oben gemachten Definitionen sind in der Simulation folgende Moden betrachtet worden:

- Moden höherer Ordnung im Kern

- in den Simulationen wurden nur die Moden zweiter Ordnung (also die Moden erster Ordnung über der Grundmode) betrachtet, da Moden der dritten und höheren Ordnung typischerweise noch höhere Wellenleiterverluste aufweisen und damit weniger relevant für die Betrachtung der Grundmodigkeit sind, welche überwiegend durch die Leistung und die Wellenleiterverluste in den Moden zweiter Ordnung bestimmt wird;

- Moden in dem ARE-Element

  - in den Simulationen wurde nur die Grundmode in dem ARE-Element betrachtet;

- Moden in der NE-Element

  - in den Simulationen wurde nur die Grundmode in dem NE-Element betrachtet.

In der Simulation wurde der effektive Modenindex $n_{eff}$ aus der Propagationskonstante $\beta$ der jeweiligen Mode extrahiert. Eine Mode "j" ist dabei eine Lösung des physikalischen Gleichungssystems:

$$E_j(x,y,z,t) = Amplitude_j(x,y) * exp(i*(\beta_j*z - \omega*t)).$$

Dabei beschreibt

- $E_j(x,y,z,t)$ die elektrische Feldverteilung in den drei Raumdimensionen x,y,z zum Zeitpunkt t,
- $Amplitude_j(x,y)$ die transversale elektrische Feldverteilung.

Folglich beschreibt die Propagationskonstante $\beta$ die Phaseneigenschaften der Wellenausbreitung entlang der Faserachse z. Basierend auf der Wellenlänge des Lichtes $\lambda$ ergibt sich $n_{eff}$ für Mode "j" direkt aus $\beta$:

$$\beta_j = 2*pi/\lambda*n_{eff,j}$$

Die Propagationskonstante der j-ten Mode - $\beta_j$ - ist als Lösung der Simulation im Allgemeinen ein komplexer Parameter. Während der Realteil n_eff,j ergibt, kann man aus dem Imaginärteil die Wellenleiterverluste ableiten, welche für die Kernmoden bestimmt wurden. Der Parameter $\beta_j$ beinhaltet also alle hier wesentlichen Eigenschaften.

Die oben genannten Nachteile bekannter antiresonanter Hohlkernfasern werden insbesondere auch überwunden, wenn eine schnelle Grundmodigkeit erreicht wird. Damit soll zum Ausdruck kommen, dass im Kern die Moden höherer Ordnung gedämpft werden und sich die antiresonante Hohlkernfaser bereits nach einer kürzeren Laufstrecke effektiv grundmodig verhält. Je kürzer diese Laufstrecke ist, desto höher die Grundmodigkeit. Physikalischer Hintergrund ist, dass die Energie der Moden höherer Ordnung im Kern in die ARE-Moden und/oder DNE-Moden koppelt, welche stärker verlustbehaftet sind. Damit leisten die Moden höherer Ordnung keinen störenden Beitrag mehr zur Lichtsignalübertragung im Kern. Bei der Simulation der antiresonanten Hohlkernfaser 1000 hat sich überraschend gezeigt, dass die ovale Geometrie des DNE-Elements 3900 die Grundmodigkeit beeinflusst.

In **Figur 8** ist für die simulierten Designs die Differenz des effektiven Modenindex $\Delta$ neff (NE) aufgetragen über dem Verhältnis der NE-Innenraumhöhe H_NE 3490, multipliziert mit dem zweifachen NE-Kreisradius NE_R 3500, dividiert durch die Faserkernfläche A_Faser 2320.

Die erwünschte Kopplung zwischen Grundmode und den NE-Moden - und damit die gute Grundmodigkeit - wird erreicht, wenn der Betrag des Modenindex $\Delta$ neff (NE) klein, insbesondere Null ist. Als vorteilhaft hat es sich herausgestellt, wenn für das Verhältnis der NE-Innenraumhöhe H_NE 3490, multipliziert mit dem zweifachen NE-Kreisradius NE_R 3500, dividiert durch die Faserkernfläche A_Faser 2320 gilt:

$$\frac{H\_NE * (2 * NE\_R)}{A\_Faser} = [0{,}35; 0{,}7]$$

Eine weitere positive Beeinflussung der Grundmodigkeit lässt sich erzielen, wenn für das Verhältnis der NE-Innenraumhöhe H_NE 3490, multipliziert mit dem zweifachen NE-Kreisradius NE_R 3500, dividiert durch die Faserkernfläche A_Faser 2320 gilt:

- größer oder gleich 0,4, insbesondere größer oder gleich 0,50, insbesondere größer oder gleich 0,56; und
- kleiner oder gleich 0,65, insbesondere kleiner oder gleich 0,62, insbesondere kleiner oder gleich 0,6.

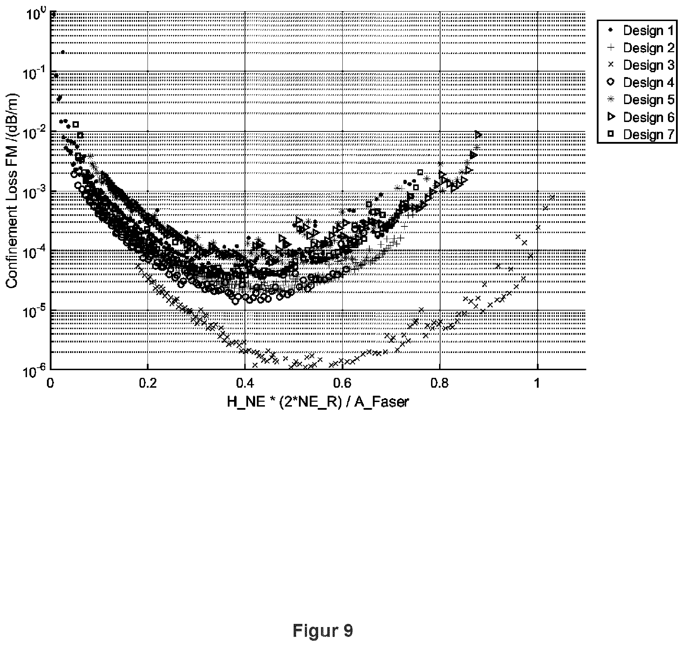

In **Figur 9** sind für die simulierten Designs der antiresonanten Hohlkernfaser 1000 die Wellenleiterverluste aufgetragen über dem - in Figur 8 ebenfalls aufgezeichneten - Verhältnis der NE-Innenraumhöhe H_NE 3490, multipliziert mit dem zweifachen NE-Kreisradius NE_R 3500, dividiert durch die Faserkernfläche A_Faser 2320. Angestrebt wird ein möglichst geringer Wellenleiterverlust. Dieses wird für die simulierten Designs erreicht, wenn gilt:

$$\frac{\text{H\_NE} * (2 * \text{NE\_R})}{\text{A\_Faser}} = [0{,}35; 0{,}7]$$

Dieses Intervall stimmt mit dem optimalen Intervall für die Grundmodigkeit überein.

Die Figuren 8 und 9 verdeutlichen die Besonderheit der beschriebenen antiresonanten Hohlkernfaser 1000. Eine geometrische Ausgestaltung der antiresonanten Hohlkernfaser 1000 gemäß

$$\frac{\text{H\_NE} * (2 * \text{NE\_R})}{\text{A\_Faser}} = [0{,}35; 0{,}7]$$

resultiert in folgenden Vorteilen:

- Diese geometrische Ausgestaltung der antiresonanten Hohlkernfaser 1000 führt dazu, dass die Differenz des effektiven Modenindex $\Delta$ neff (NE) nahe oder gleich Null ist. Folglich propagieren Moden höherer Ordnung im Kern und die Moden in dem NE-Element mit etwa der gleichen Phasenausbreitungsgeschwindigkeit und können damit kohärent (phasentreu) koppeln, was zu einer effektiven Energie-Kopplung führt. So wandert Energie aus den Kernmoden höherer Ordnung in die ARE-Moden und/oder DNE-Moden, was zu einer Verbesserung der Grundmodigkeit führt.
- Weiterhin ermöglicht diese geometrische Ausgestaltung der antiresonanten Hohlkernfaser 1000 einen geringen Wellenleiterverlust. Die Grundmode der antiresonanten Hohlkernfaser 1000 unterliegt einer geringen Dämpfung. So bedarf es bei einer kommerziellen Nutzung der antiresonanten Hohlkernfaser 1000 nur einer kleinen Anzahl an Verstärkern, um eine große Distanz zu überbrücken.

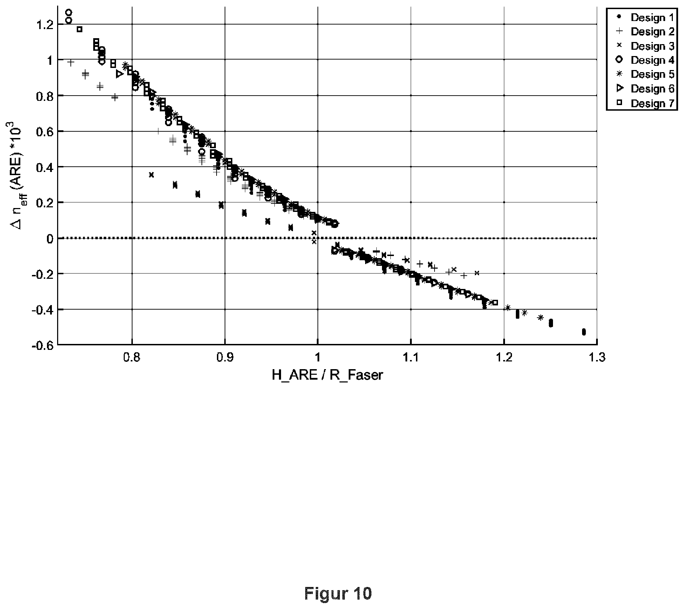

In **Figur 10** ist die Differenz des effektiven Modenindex $\Delta$ neff (ARE) aufgetragen über dem Verhältnis der ARE- Innenraumhöhe H_ARE 3190, dividiert durch den Kernradius R_Faser 2310. Als vorteilhaft hat es sich herausgestellt, wenn für das Verhältnis der ARE-Innenraumhöhe H_ARE 3190, dividiert durch den Kernradius R_Faser 2310 gilt:

$$\frac{\text{H\_ARE}}{\text{R\_Faser}} = [0{,}85; 1{,}25]$$

Diese geometrische Ausgestaltung der antiresonanten Hohlkernfaser 1000 führt dazu, dass die Differenz des effektiven Modenindex $\Delta$ neff (ARE) nahe oder gleich Null ist.

Eine weitere positive Beeinflussung der Grundmodigkeit lässt sich erzielen, wenn für das Verhältnis der ARE- Innenraumhöhe H_ARE 3190 dividiert durch den Kernradius R_Faser 2310 gilt:

- größer oder gleich 0,9, insbesondere größer oder gleich 0,95, insbesondere größer oder gleich 1,0; und
- kleiner oder gleich 1,2, insbesondere kleiner oder gleich 1,15, insbesondere kleiner oder gleich 1,1.

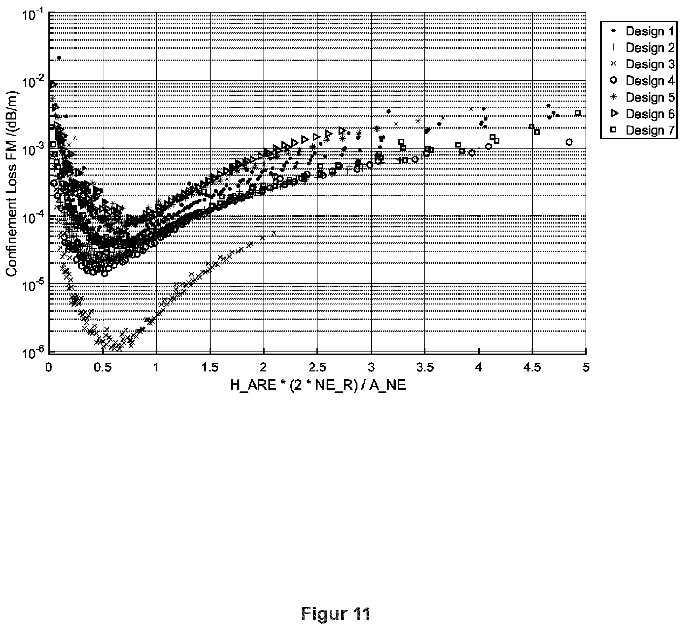

In **Figur 11** sind für die Designs der antiresonanten Hohlkernfaser 1000 die Wellenleiterverluste aufgetragen über dem Verhältnis der ARE-Innenraumhöhe H_ARE 3190, multipliziert mit dem zweifachen NE-Kreisradius NE_R 3500, dividiert durch die NE-Innenfläche A_NE 3480. Als vorteilhaft hat es sich herausgestellt, wenn für das Verhältnis der ARE-Innenraumhöhe H_ARE 3190, multipliziert mit dem zweifachen NE-Kreisradius NE_R 3500, dividiert durch die NE- Innenfläche A_NE 3480 gilt:

$$\frac{\text{H\_ARE} * (2 * \text{NE\_R})}{\text{A\_NE}} = [0{,}2; 1{,}0]$$

Eine weitere positive Beeinflussung der Wellenleiterverluste lässt sich erzielen, wenn für das Verhältnis der ARE-Innenraumhöhe H_ARE 3190, multipliziert mit dem zweifachen NE-Kreisradius NE_R 3500, dividiert durch die NE- Innenfläche A_NE 3480 gilt:

- größer oder gleich 0,25, insbesondere größer oder gleich 0,3; und
- kleiner oder gleich 0,95, insbesondere kleiner oder gleich 0,8.

Eine weitere positive Beeinflussung

1. der Kopplung der Moden höherer Ordnung im Kern mit den Moden in den Antiresonanzeinheiten 3000, und
2. der Wellenleiterverluste der Grundmode

lässt sich erzielen, wenn für die antiresonante Hohlkernfaser 1000 mindestens zwei der folgenden gelten:

- das Verhältnis der längsten Querschnittsachse AL 4010 zur kürzesten Querschnittsachse AK 4020 beträgt

$$\frac{AL}{AK} = [1,1; 4,0]$$

- das Verhältnis der NE-Innenraumhöhe H_NE 3490, multipliziert mit dem zweifachen NE-Kreisradius NE_R 3500, dividiert durch die Faserkernfläche A_Faser 2320 beträgt

$$\frac{H\_NE * (2 * NE\_R)}{A\_Faser} = [0,35; 0,7]$$

- das Verhältnis der ARE-Innenraumhöhe H_ARE 3190, dividiert durch den Kernradius R_Faser 2310 beträgt

$$\frac{H\_ARE}{R\_Faser} = [0,85; 1,25]$$

- das Verhältnis der ARE-Innenraumhöhe H_ARE 3190, multipliziert mit dem zweifachen NE-Kreisradius NE_R 3500, dividiert durch die NE-Innenfläche A_NE 3480 beträgt

$$\frac{H\_ARE * (2 * NE\_R)}{A\_NE} = [0,2; 1,0]$$

**Bezugzeichen**

1000     antiresonante Hohlkernfaser

2000     Mantel oder Fasermantel
2150     Innenseite des Mantels
2170     Mantelinnenradius

2300     Faser-Längsachse
2310     Kernradius R_Faser
2320     Faserkernfläche A_Faser

2990     Kreis

3000     Antiresonanzeinheit, auch ARE-Einheit

3100     ARE-Element
3110     erste Körperlängsachse
3150     ARE-Elementwandung
3170     erster Innenraum des ARE-Elements
3180     ARE-Innenfläche

3190    ARE-Innenraumhöhe H_ARE
3200    erster Kreisradius R_ARE

3400                NE-Element
3410                zweite Körperlängsachse
3450                NE-Elementwandung
3470                zweiter Innenraum des NE-Elements
3480                NE-Innenfläche A_NE
3490                NE-Innenraumhöhe H_NE
3500                zweiter Kreisradius R_NE
3550                Mittelpunktswinkel MW_NE
3580                Segmenthöhe SH_NE
3590                Sehnenlänge
3700,3700'          Verbindungsnaht
3705, 3705', 3705"  Verbindungshöhe

3900    DNE-Element der antiresonanten Hohlkernfaser
3950    DNE-Elementwandung
3970    dritter Innenraum des DNE-Elements
3980    DNE-Innenfläche A_DNE

4000, 4000'    zwei Brennpunkte
4010           längste Querschnittsachse AL
4020           kürzeste Querschnittsachse AK
4080           Länge der längsten Querschnittsachse AL
4090           Länge der kürzesten Querschnittsachse AK

**Patentansprüche**

1.  Antiresonante Hohlkernfaser (1000), umfassend

    einen Fasermantel (2000), welcher eine Innenbohrung (2200) aufweist,
    eine Faser-Längsachse (2300) und einen Faserkernradius R_Faser (2310),
    eine Anzahl von Antiresonanzeinheiten (3000), jeweils umfassend

        • ein ARE-Element (3100),
        • ein NE-Element (3400),
        • ein DNE-Element (3900),

    wobei die Antiresonanzeinheiten (3000) zueinander beabstandet und zueinander kontaktfrei an Soll-Positionen an einer Innenseite (2150) der Innenbohrung (2200) angeordnet sind,
    wobei in den Antiresonanzeinheiten (3000)

        • das ARE-Element (3100) einen kreisförmigen Querschnitt aufweist,
        • das NE-Element (3400) in einem ersten Innenraum (3170) des ARE-Elements (3100) angeordnet ist, und
        • das DNE-Element (3900) zumindest teilweise in einen zweiten Innenraum (3470) des NE-Elements (3400) angeordnet ist,

    wobei in mindestens einer Antiresonanzeinheit (3000)

        • das NE-Element (3400) einen kreisbogenartigen Querschnitt aufweist **dadurch gekennzeichnet, dass** in der Antiresonanzeinheit, das NE-Element entlang zweier Verbindungsnähte (3700, 3700') mit dem DNE-Element (3400) verbunden ist,
        • das DNE-Element (3900) einen ovalen Querschnitt aufweist, und
        • im Querschnitt eine Summe der Abstände eines beliebigen Punktes auf einer DNE-Elementwandung (3950) von zwei Brennpunkten (4000,4000') für alle Punkte auf weniger als 15 % der Summe der Abstände gleich ist.

2. Antiresonante Hohlkernfaser (1000) nach Anspruch 1, **dadurch gekennzeichnet, dass** im Querschnitt die Summe der Abstände eines beliebigen Punktes auf der DNE-Elementwandung (3950) von zwei Brennpunkten (4000,4000') für alle Punkte auf weniger als 10 %, insbesondere weniger als 5 % der Summe der Abstände gleich ist.

3. Antiresonante Hohlkernfaser (1000) nach einem der vorherigen Ansprüche, **dadurch gekennzeichnet, dass** das DNE-Element (3900) eine längste Querschnittsachse AL (4010) und eine kürzeste Querschnittsachse AK (4020) aufweist und für ein Verhältnis der längsten Querschnittsachse AL (4010) zur kürzesten Querschnittsachse AK (4020) gilt:

$$\frac{AL}{AK} = [1,1; 4,0]$$

4. Antiresonante Hohlkernfaser (1000) nach Anspruch 3, **dadurch gekennzeichnet, dass** für das Verhältnis der längsten Querschnittsachse AL (4010) zur kürzesten Querschnittsachse AK (4020) gilt:

• größer oder gleich 1,15, insbesondere größer oder gleich 1,20, insbesondere größer oder gleich 1,25, insbesondere größer oder gleich 1,50; und
• kleiner oder gleich 3,80, insbesondere kleiner oder gleich 3,60, insbesondere kleiner oder gleich 3,50.

5. Antiresonante Hohlkernfaser (1000) nach einem der vorherigen Ansprüche, **dadurch gekennzeichnet, dass** für ein Verhältnis einer NE-Innenraumhöhe H_NE (3490), multipliziert mit einem zweifachen NE-Kreisradius NE_R (3500), dividiert durch eine Faserkernfläche A_Faser (2320) gilt:

$$\frac{H\_NE * (2 * NE\_R)}{A\_Faser} = [0,35; 0,7]$$

6. Antiresonante Hohlkernfaser (1000) nach Anspruch 5, **dadurch gekennzeichnet, dass** für das Verhältnis der NE-Innenraumhöhe H_NE (3490), multipliziert mit dem zweifachen NE-Kreisradius NE_R (3500), dividiert durch die Faserkernfläche A_Faser (2320) gilt:

• größer oder gleich 0,4, insbesondere größer oder gleich 0,50, insbesondere größer oder gleich 0,56; und
• kleiner oder gleich 0,65, insbesondere kleiner oder gleich 0,62, insbesondere kleiner oder gleich 0,6.

7. Antiresonante Hohlkernfaser (1000) nach einem der vorherigen Ansprüche, **dadurch gekennzeichnet, dass** für ein Verhältnis einer ARE-Innenraumhöhe H_ARE (3190) dividiert durch einen Kernradius R_Faser (2310) gilt:

$$\frac{H\_ARE}{R\_Faser} = [0,85; 1,25]$$

8. Antiresonante Hohlkernfaser (1000) nach Anspruch 7, **dadurch gekennzeichnet, dass** für das Verhältnis der ARE-Innenraumhöhe H_ARE (3190) dividiert durch den Kernradius R_Faser (2310) gilt:

• größer oder gleich 0,9, insbesondere größer oder gleich 0,95, insbesondere größer oder gleich 1,0; und
• kleiner oder gleich 1,2, insbesondere kleiner oder gleich 1,15, insbesondere kleiner oder gleich 1,1.

9. Antiresonante Hohlkernfaser (1000) nach einem der vorherigen Ansprüche, **dadurch gekennzeichnet, dass** für ein Verhältnis der ARE-Innenraumhöhe H_ARE (3190), multipliziert mit dem zweifachen NE-Kreisradius NE_R (3500), dividiert durch eine NE-Innenfläche A_NE (3480) gilt:

$$\frac{H\_ARE * (2 * NE\_R)}{A\_NE} = [0,2; 1,0]$$

10. Antiresonante Hohlkernfaser (1000) nach Anspruch 9, **dadurch gekennzeichnet, dass** für das Verhältnis der ARE-Innenraumhöhe H_ARE (3190), multipliziert mit dem zweifachen NE-Kreisradius NE_R (3500), dividiert durch die NE-Innenfläche A_NE (3480) gilt:

- größer oder gleich 0,25, insbesondere größer oder gleich 0,3; und
- kleiner oder gleich 0,95, insbesondere kleiner oder gleich 0,8.

11. Antiresonante Hohlkernfaser (1000) nach einem der vorherigen Ansprüche, **dadurch gekennzeichnet, dass** die wenigstens eine Antiresonanzeinheit (3000) wenigstens eines der folgenden Merkmale aufweist:

- eine Wandstärke einer ARE-Elementwandung (3150) des ARE-Elements (3100) und/oder einer NE-Elementwandung (3450) des NE-Elements (3400) und/oder einer DNE-Elementwandung (3950) des DNE-Elements (3900) beträgt zwischen 0,1 $\mu$m und 2,5 $\mu$m, insbesondere zwischen 0,15 $\mu$m und 1,5 $\mu$m, insbesondere zwischen 0,25 $\mu$m und 0,75 $\mu$m, insbesondere zwischen 0,35 $\mu$m und 0,65 $\mu$m, insbesondere 0,5 $\mu$m,
- eine Wandstärke einer ARE-Elementwandung (3150) des ARE-Elements (3100) und/oder einer NE-Elementwandung (3450) des NE-Elements (3400) und/oder einer DNE-Elementwandung (3950) des DNE-Elements (3900) beträgt bei einer Signalwellenlänge von 1550 nm im ersten Transmissionsfenster zwischen 0,35 $\mu$m und 0,65 $\mu$m, insbesondere zwischen 0,4 $\mu$m und 0,6 $\mu$m, insbesondere 0,5 $\mu$m,
- eine Wandstärke einer ARE-Elementwandung (3150) des ARE-Elements (3100) und/oder einer NE-Elementwandung (3450) des NE-Elements (3400) und/oder einer DNE-Elementwandung (3950) des DNE-Elements (3900) beträgt bei einer Signalwellenlänge von 1550 nm im zweiten Transmissionsfenster zwischen 0,75 $\mu$m und 1,25 $\mu$m, insbesondere zwischen 0,9 $\mu$m und 1,1 $\mu$m, insbesondere 1 $\mu$m.

12. Antiresonante Hohlkernfaser (1000) nach einem der vorherigen Ansprüche, **dadurch gekennzeichnet, dass** der Kernradius R_Faser (2310) wenigstens eines der folgenden Merkmale aufweist:

- kleiner oder gleich 26 $\mu$m, insbesondere kleiner oder gleich 23 $\mu$m, insbesondere kleiner oder gleich 20 $\mu$m; und
- größer oder gleich 10 $\mu$m, insbesondere größer oder gleich 12 $\mu$m, insbesondere größer oder gleich 14 $\mu$m.

13. Antiresonante Hohlkernfaser (1000) nach einem der vorherigen Ansprüche, **dadurch gekennzeichnet, dass** das ARE-Element (3100) wenigstens eines der folgenden Merkmale aufweist:

- ein erster Kreisradius R_ARE (3200) kleiner oder gleich 30 $\mu$m, insbesondere kleiner oder gleich 25 $\mu$m, insbesondere kleiner oder gleich 22,5 $\mu$m, insbesondere kleiner oder gleich 16 $\mu$m ist; und
- der erste Kreisradius R_ARE (3200) größer oder gleich 5 $\mu$m, insbesondere größer oder gleich 7 $\mu$m, insbesondere größer oder gleich 11,5 $\mu$m, insbesondere größer oder gleich 12,25 $\mu$m ist, insbesondere größer oder gleich 14,5 $\mu$m ist.

14. Antiresonante Hohlkernfaser (1000) nach einem der vorherigen Ansprüche, **dadurch gekennzeichnet, dass** das NE-Element (3400) wenigstens eines der folgenden Merkmale aufweist:

- ein zweiter Kreisradius R_NE (3500) kleiner oder gleich als 25 $\mu$m, insbesondere kleiner oder gleich als 19 $\mu$m, insbesondere kleiner oder gleich 17 $\mu$m ist,
- der zweite Kreisradius R_NE (3500) größer oder gleich 1,5 $\mu$m, insbesondere größer als 2,5 $\mu$m, insbesondere größer oder gleich 3,5 $\mu$m ist,
- ein Mittelpunktswinkel MW_NE (3550) kleiner 340°, insbesondere kleiner 330°, insbesondere kleiner 320° ist; und
- der Mittelpunktswinkel MW_NE (3550) größer 180°, insbesondere größer 200°, insbesondere größer 220° ist.

15. Antiresonante Hohlkernfaser (1000) nach einem der vorherigen Ansprüche 3 bis 14, **dadurch gekennzeichnet, dass** das DNE-Element (3900) wenigstens eines der folgenden Merkmale aufweist:

- die längste Querschnittsachse AL (4010) kleiner oder gleich 20 $\mu$m, insbesondere kleiner oder gleich 16,5 $\mu$m, insbesondere kleiner oder gleich 14,6 $\mu$m ist;
- der längste Querschnittsachse AL (4010) größer oder gleich 4 $\mu$m, insbesondere größer oder gleich 6,5 $\mu$m, insbesondere größer oder gleich 8 $\mu$m ist;
- die kürzeste Querschnittsachse AK (4020) kleiner oder gleich 12 $\mu$m, insbesondere kleiner oder gleich 9,5 $\mu$m, insbesondere kleiner oder gleich 8 $\mu$m ist; und
- der kürzeste Querschnittsachse AK (4020) größer oder gleich 1,5 $\mu$m, insbesondere größer oder gleich 2,5 $\mu$m, insbesondere größer oder gleich 4 $\mu$m ist.

**Claims**

1. An anti-resonant hollow-core fiber (1000), comprising

   a fiber cladding (2000) which comprises an inner bore (2200),
   a fiber longitudinal axis (2300) and a fiber core radius R_Faser (2310),
   a number of anti-resonance units (3000), each comprising

   • an ARE element (3100),
   • an NE element (3400),
   • a DNE element (3900),

   wherein the anti-resonance units (3000) are mutually spaced and are arranged so as to have no contact with one another at desired positions on an inner side (2150) of the inner bore (2200),
   wherein in the anti-resonance units (3000)

   • the ARE element (3100) has a circular cross section,
   • the NE element (3400) is arranged in a first interior (3170) of the ARE element (3100), and
   • the DNE element (3900) is arranged at least partially in a second interior (3470) of the NE element (3400),

   wherein in at least one anti-resonance unit (3000)

   • the NE element (3400) has a circular-arc-like cross section,
   **characterized in that**
   in the anti-resonance unit, the NE element is connected, along two connection seams (3700, 3700'), to the DNE element (3400),
   • the DNE element (3900) has an oval cross section, and
   • in cross section, a sum of the distances of any point on a DNE element wall (3950) from two focal points (4000,4000') is the same for all points to less than 15% of the sum of the distances.

2. The anti-resonant hollow-core fiber (1000) according to claim 1, **characterized in that,** in cross section, the sum of the distances of any point on the DNE element wall (3950) from two focal points (4000,4000') is the same for all points to less than 10%, in particular less than 5% of the sum of the distances.

3. The anti-resonant hollow-core fiber (1000) according to either of the preceding claims, **characterized in that** the DNE element (3900) comprises a longest cross-sectional axis AL (4010) and a shortest cross-sectional axis AK (4020) and, for a ratio of the longest cross-sectional axis AL (4010) to the shortest cross-sectional axis AK (4020), the following applies:

$$\frac{AL}{AK} = [1.1; 4.0]$$

4. The anti-resonant hollow-core fiber (1000) according to claim 3, **characterized in that,** for the ratio of the longest cross-sectional axis AL (4010) to the shortest cross-sectional axis AK (4020), the following applies:

   • it is greater than or equal to 1.15, in particular greater than or equal to 1.20, in particular greater than or equal to 1.25, in particular greater than or equal to 1.50; and
   • it is less than or equal to 3.80, in particular less than or equal to 3.60, in particular less than or equal to 3.50.

5. The anti-resonant hollow-core fiber (1000) according to any of the preceding claims, **characterized in that,** for a ratio of an NE interior height H_NE (3490), multiplied by a doubled NE circle radius NE_R (3500), divided by a fiber core surface area A_Faser (2320), the following applies:

$$\frac{H\_NE * (2 * NE\_R)}{A\_Faser} = [0.35; 0.7]$$

26

**6.** The anti-resonant hollow-core fiber (1000) according to claim 5, **characterized in that,** for the ratio of the NE interior height H_NE (3490), multiplied by the doubled NE circle radius NE_R (3500), divided by the fiber core surface area A_Faser (2320), the following applies:

- it is greater than or equal to 0.4, in particular greater than or equal to 0.50, in particular greater than or equal to 0.56; and
- it is less than or equal to 0.65, in particular less than or equal to 0.62, in particular less than or equal to 0.6.

**7.** The anti-resonant hollow-core fiber (1000) according to any of the preceding claims, **characterized in that,** for a ratio of an ARE interior height H_ARE (3190) divided by a core radius R_Faser (2310), the following applies:

$$\frac{\text{H\_ARE}}{\text{R\_Faser}} = [0.85; 1.25]$$

**8.** The anti-resonant hollow-core fiber (1000) according to claim 7, **characterized in that,** for the ratio of the ARE interior height H_ARE (3190) divided by the core radius R_Faser (2310), the following applies:

- it is greater than or equal to 0.9, in particular greater than or equal to 0.95, in particular greater than or equal to 1.0; and
- it is less than or equal to 1.2, in particular less than or equal to 1.15, in particular less than or equal to 1.1.

**9.** The anti-resonant hollow-core fiber (1000) according to any of the preceding claims, **characterized in that,** for a ratio of the ARE interior height H_ARE (3190), multiplied by the doubled NE circle radius NE_R (3500), divided by an NE internal surface area A_NE (3480), the following applies:

$$\frac{\text{H\_ARE} * (2 * \text{NE\_R})}{\text{A\_NE}} = [0.2; 1.0]$$

**10.** The anti-resonant hollow-core fiber (1000) according to claim 9, **characterized in that,** for the ratio of the ARE interior height H_ARE (3190), multiplied by the doubled NE circle radius NE_R (3500), divided by the NE internal surface area A_NE (3480), the following applies:

- it is greater than or equal to 0.25, in particular greater than or equal to 0.3; and
- it is less than or equal to 0.95, in particular less than or equal to 0.8.

**11.** The anti-resonant hollow-core fiber (1000) according to any of the preceding claims, **characterized in that** the at least one anti-resonance unit (3000) comprises at least one of the following features:

- a wall thickness of an ARE element wall (3150) of the ARE element (3100) and/or an NE element wall (3450) of the NE element (3400) and/or a DNE element wall (3950) of the DNE element (3900) is between 0.1 $\mu$m and 2.5 $\mu$m, in particular between 0.15 $\mu$m and 1.5 $\mu$m, in particular between 0.25 $\mu$m and 0.75 $\mu$m, in particular between 0.35 $\mu$m and 0.65 $\mu$m, in particular 0.5 $\mu$m,
- a wall thickness of an ARE element wall (3150) of the ARE element (3100) and/or an NE element wall (3450) of the NE element (3400) and/or a DNE element wall (3950) of the DNE element (3900) is, at a signal wavelength of 1550 nm in the first transmission window, between 0.35 $\mu$m and 0.65 $\mu$m, in particular between 0.4 $\mu$m and 0.6 $\mu$m, in particular 0.5 $\mu$m,
- a wall thickness of an ARE element wall (3150) of the ARE element (3100) and/or an NE element wall (3450) of the NE element (3400) and/or a DNE element wall (3950) of the DNE element (3900) is, at a signal wavelength of 1550 nm in the second transmission window, between 0.75 $\mu$m and 1.25 $\mu$m, in particular between 0.9 $\mu$m and 1.1 $\mu$m, in particular 1 $\mu$m.

**12.** The anti-resonant hollow-core fiber (1000) according to any of the preceding claims, **characterized in that** the core radius R_Faser (2310) comprises at least one of the following features:

- it is less than or equal to 26 $\mu$m, in particular less than or equal to 23 $\mu$m, in particular less than or equal to 20 $\mu$m;

and
• it is greater than or equal to 10 μm, in particular greater than or equal to 12 μm, in particular greater than or equal to 14 μm.

**13.** The anti-resonant hollow-core fiber (1000) according to any of the preceding claims, **characterized in that** the ARE element (3100) comprises at least one of the following features:

• a first circle radius R_ARE (3200) is less than or equal to 30 μm, in particular less than or equal to 25 μm, in particular less than or equal to 22.5 μm, in particular less than or equal to 16 μm; and
• the first circle radius R_ARE (3200) is greater than or equal to 5 μm, in particular greater than or equal to 7 μm, in particular greater than or equal to 11.5 μm, in particular greater than or equal to 12.25 μm, in particular greater than or equal to 14.5 μm.

**14.** The anti-resonant hollow-core fiber (1000) according to any of the preceding claims, **characterized in that** the NE element (3400) comprises at least one of the following features:

• a second circle radius R_NE (3500) is less than or equal to 25 μm, in particular less than or equal to 19 μm, in particular less than or equal to 17 μm,
• the second circle radius R_NE (3500) is greater than or equal to 1.5 μm, in particular greater than 2.5 μm, in particular greater than or equal to 3.5 μm,
• a center point angle MW_NE (3550) is less than 340°, in particular less than 330°, in particular less than 320°; and
• the center point angle MW_NE (3550) is greater than 180°, in particular greater than 200°, in particular greater than 220°.

**15.** The anti-resonant hollow-core fiber (1000) according to any of the preceding claims 3 to 14, **characterized in that** the DNE element (3900) comprises at least one of the following features:

• the longest cross-sectional axis AL (4010) is less than or equal to 20 μm, in particular less than or equal to 16.5 μm, in particular less than or equal to 14.6 μm;
• the longest cross-sectional axis AL (4010) is greater than or equal to 4 μm, in particular greater than or equal to 6.5 μm, in particular greater than or equal to 8 μm;
• the shortest cross-sectional axis AK (4020) is less than or equal to 12 μm, in particular less than or equal to 9.5 μm, in particular less than or equal to 8 μm; and
• the shortest cross-sectional axis AK (4020) is greater than or equal to 1.5 μm, in particular greater than or equal to 2.5 μm, in particular greater than or equal to 4 μm.

**Revendications**

**1.** Fibre à cœur creux antirésonante (1000), comprenant

une gaine de fibre (2000), laquelle présente un alésage intérieur (2200),
un axe longitudinal de fibre (2300) et un rayon de cœur de fibre R_Fibre (2310),
un certain nombre d'unités antirésonance (3000), comprenant respectivement

• un élément ARE (3100),
• un élément NE (3400),
• un élément DNE (3900),

dans laquelle les unités antirésonance (3000) sont espacées les unes des autres et sont disposées sans contact les unes par rapport aux autres à des positions de consigne sur une face intérieure (2150) de l'alésage intérieur (2200),
dans laquelle, dans les unités antirésonance (3000)

• l'élément ARE (3100) présente une section transversale circulaire,
• l'élément NE (3400) est disposé dans un premier espace intérieur (3170) de l'élément ARE (3100), et
• l'élément DNE (3900) est disposé au moins partiellement dans un second espace intérieur (3470) de l'élément NE (3400),

dans laquelle, dans au moins une unité antirésonance (3000)

- l'élément NE (3400) présente une section transversale en arc de cercle, **caractérisée en ce que**

dans l'unité antirésonance, l'élément NE est relié
à l'élément DNE (3400) le long de deux soudures de liaison (3700, 3700'),

- l'élément DNE (3900) présente une section transversale ovale, et
- dans la section transversale, une somme des distances d'un point quelconque sur une paroi d'élément DNE (3950) à partir de deux foyers (4000, 4000') est égale pour tous les points à moins de 15 % de la somme des distances.

**2.** Fibre à cœur creux antirésonante (1000) selon la revendication 1,
**caractérisée en ce que,** dans la section transversale, la somme des distances d'un point quelconque sur la paroi d'élément DNE (3950) à partir de deux foyers (4000, 4000') est égale pour tous les points à moins de 10 %, en particulier à moins de 5 %, de la somme des distances.

**3.** Fibre à cœur creux antirésonante (1000) selon l'une des revendications précédentes,
**caractérisée en ce que** l'élément DNE (3900) présente un axe de section transversale le plus long AL (4010) et un axe de section transversale le plus court AK (4020) et, pour un rapport de l'axe de section transversale le plus long AL (4010) à l'axe de section transversale le plus court AK (4020), ceci s'applique :

$$\frac{AL}{AK} = [1,1\ ;\ 4,0]$$

**4.** Fibre à cœur creux antirésonante (1000) selon la revendication 3,
**caractérisée en ce que,** pour le rapport de l'axe de section transversale le plus long AL (4010) à l'axe de section transversale le plus court AK (4020), ceci s'applique :

- supérieur ou égal à 1,15, en particulier supérieur ou égal à 1,20, en particulier supérieur ou égal à 1,25, en particulier supérieur ou égal à 1,50 ; et
- inférieur ou égal à 3,80, en particulier inférieur ou égal à 3,60, en particulier inférieur ou égal à 3,50.

**5.** Fibre à cœur creux antirésonante (1000) selon l'une des revendications précédentes,
**caractérisée en ce que,** pour un rapport d'une hauteur d'espace intérieur NE H_NE (3490), multipliée par un rayon de cercle NE doublé NE_R (3500), divisée par une surface de cœur de fibre A_Fibre (2320), ceci s'applique :

$$\frac{H\_NE * (2 * NE\_R)}{A\_Fibre} = [0,35\ ;\ 0,7]$$

**6.** Fibre à cœur creux antirésonante (1000) selon la revendication 5,
**caractérisée en ce que,** pour le rapport de la hauteur d'espace intérieur NE H_NE (3490), multipliée par le rayon de cercle NE doublé NE_R (3500), divisée par la surface de cœur de fibre A_Fibre (2320), ceci s'applique :

- supérieur ou égal à 0,4, en particulier supérieur ou égal à 0,50, en particulier supérieur ou égal à 0,56 ; et
- inférieur ou égal à 0,65, en particulier inférieur ou égal à 0,62, en particulier inférieur ou égal à 0,6.

**7.** Fibre à cœur creux antirésonante (1000) selon l'une des revendications précédentes,
**caractérisée en ce que,** pour un rapport d'une hauteur d'espace intérieur ARE H_ARE (3190) divisée par un rayon de cœur R_Fibre (2310), ceci s'applique :

$$\frac{\text{H\_ARE}}{\text{R\_Fibre}} = [0{,}85 \ ; \ 1{,}25]$$

**8.** Fibre à cœur creux antirésonante (1000) selon la revendication 7,
**caractérisée en ce que,** pour le rapport de la hauteur d'espace intérieur ARE H_ARE (3190) divisée par le rayon de cœur R_Fibre (2310), ceci s'applique :

- supérieur ou égal à 0,9, en particulier supérieur ou égal à 0,95, en particulier supérieur ou égal à 1,0 ; et
- inférieur ou égal à 1,2, en particulier inférieur ou égal à 1,15, en particulier inférieur ou égal à 1,1.

**9.** Fibre à cœur creux antirésonante (1000) selon l'une des revendications précédentes,
**caractérisée en ce que,** pour un rapport de la hauteur d'espace intérieur ARE H_ARE (3190), multipliée par le rayon de cercle NE doublé NE_R (3500), divisée par une surface intérieure NE A_NE (3480), ceci s'applique :

$$\frac{\text{H\_ARE} * (2 * \text{NE\_R})}{\text{A\_NE}} = [0{,}2 \ ; \ 1{,}0]$$

**10.** Fibre à cœur creux antirésonante (1000) selon la revendication 9,
**caractérisée en ce que,** pour le rapport de la hauteur d'espace intérieur ARE H_ARE (3190), multipliée par le rayon de cercle NE doublé NE_R (3500), divisée par la surface intérieure NE A_NE (3480), ceci s'applique :

- supérieur ou égal à 0,25, en particulier supérieur ou égal à 0,3 ; et
- inférieur ou égal à 0,95, en particulier inférieur ou égal à 0,8.

**11.** Fibre à cœur creux antirésonante (1000) selon l'une des revendications précédentes,
**caractérisée en ce que** l'au moins une unité antirésonance (3000) présente au moins l'une des caractéristiques suivantes :

- une épaisseur de paroi d'une paroi d'élément ARE (3150) de l'élément ARE (3100) et/ou d'une paroi d'élément NE (3450) de l'élément NE (3400) et/ou d'une paroi d'élément DNE (3950) de l'élément DNE (3900) est comprise entre 0,1 $\mu$m et 2,5 $\mu$m, en particulier entre 0,15 $\mu$m et 1,5 $\mu$m, en particulier entre 0,25 $\mu$m et 0,75 $\mu$m, en particulier entre 0,35 $\mu$m et 0,65 $\mu$m, en particulier est de 0,5 $\mu$m,
- une épaisseur de paroi d'une paroi d'élément ARE (3150) de l'élément ARE (3100) et/ou d'une paroi d'élément NE (3450) de l'élément NE (3400) et/ou d'une paroi d'élément DNE (3950) de l'élément DNE (3900) est comprise entre 0,35 $\mu$m et 0,65 $\mu$m, en particulier entre 0,4 $\mu$m et 0,6 $\mu$m, en particulier est de 0,5 $\mu$m, pour une longueur d'onde de signal de 1550 nm dans la première fenêtre de transmission,
- une épaisseur de paroi d'une paroi d'élément ARE (3150) de l'élément ARE (3100) et/ou d'une paroi d'élément NE (3450) de l'élément NE (3400) et/ou d'une paroi d'élément DNE (3950) de l'élément DNE (3900) est comprise entre 0,75 $\mu$m et 1,25 $\mu$m, en particulier entre 0,9 $\mu$m et 1,1 $\mu$m, en particulier est de 1 $\mu$m, pour une longueur d'onde de signal de 1550 nm dans la seconde fenêtre de transmission.

**12.** Fibre à cœur creux antirésonante (1000) selon l'une des revendications précédentes,
**caractérisée en ce que** le rayon de cœur R_Fibre (2310) présente au moins l'une des caractéristiques suivantes :

- inférieur ou égal à 26 $\mu$m, en particulier inférieur ou égal à 23 $\mu$m, en particulier inférieur ou égal à 20 $\mu$m ; et
- supérieur ou égal à 10 $\mu$m, en particulier supérieur ou égal à 12 $\mu$m, en particulier supérieur ou égal à 14 $\mu$m.

**13.** Fibre à cœur creux antirésonante (1000) selon l'une des revendications précédentes,
**caractérisée en ce que** l'élément ARE (3100) présente au moins l'une des caractéristiques suivantes :

- un premier rayon de cercle R_ARE (3200) est inférieur ou égal à 30 $\mu$m, en particulier inférieur ou égal à 25 $\mu$m, en particulier inférieur ou égal à 22,5 $\mu$m, en particulier inférieur ou égal à 16 $\mu$m ; et
- le premier rayon de cercle R_ARE (3200) est supérieur ou égal à 5 $\mu$m, en particulier supérieur ou égal à 7 $\mu$m, en particulier supérieur ou égal à 11,5 $\mu$m, en particulier supérieur ou égal à 12,25 $\mu$m, en particulier supérieur ou égal à 14,5 $\mu$m.

**14.** Fibre à cœur creux antirésonante (1000) selon l'une des revendications précédentes, **caractérisée en ce que** l'élément NE (3400) présente au moins l'une des caractéristiques suivantes :

> • un second rayon de cercle R_NE (3500) est inférieur ou égal à 25 μm, en particulier inférieur ou égal à 19 μm, en particulier inférieur ou égal à 17 μm,
> • le second rayon de cercle R_NE (3500) est supérieur ou égal à 1,5 μm, en particulier supérieur à 2,5 μm, en particulier supérieur ou égal à 3,5 μm,
> • un angle au centre MW_NE (3550) est inférieur à 340°, en particulier inférieur à 330°, en particulier inférieur à 320° ; et
> • l'angle au centre MW_NE (3550) est supérieur à 180°, en particulier supérieur à 200°, en particulier est supérieur à 220°.

**15.** Fibre à cœur creux antirésonante (1000) selon l'une des revendications 3 à 14 précédentes, **caractérisée en ce que** l'élément DNE (3900) présente au moins l'une des caractéristiques suivantes :

> • l'axe de section transversale le plus long AL (4010) est inférieur ou égal à 20 μm, en particulier inférieur ou égal à 16,5 μm, en particulier inférieur ou égal à 14,6 μm ;
> • l'axe de section transversale le plus long AL (4010) est supérieur ou égal à 4 μm, en particulier supérieur ou égal à 6,5 μm, en particulier supérieur ou égal à 8 μm ;
> • l'axe de section transversale le plus court AK (4020) est inférieur ou égal à 12 μm, en particulier inférieur ou égal à 9,5 μm, en particulier inférieur ou égal à 8 μm ; et
> • l'axe de section transversale le plus court AK (4020) est supérieur ou égal à 1,5 μm, en particulier supérieur ou égal à 2,5 μm, en particulier supérieur ou égal à 4 μm.

3100

3170

3200

3180

3110

3150

**Figur 1**

3400

3550

3500

3410

3450

3580

G

H

I

G

H

3470

I

2990

3590

**Figur 2**

3900

4000

4000'

4090

4010

4020

3950

3980

3970

4080

Figur 3

Figur 4

Figur 5a

Figur 5b

C                 D

3400      3900

3450

3700

A3

A2

A1

3705´´

3705´

3705

2990    2990´    2990``

**Figur 5 c**

Figur 6

Figur 7

Figur 8

Figur 9

Figur 10

Figur 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019053412 A1